# EUROPEAN PATENT SPECIFICATION

(11) **EP 2 844 892 B1**
(45) Date of publication and mention of the grant of the patent: **19.10.2016**
(21) Application number: 13703948.3
(22) Date of filing: 25.01.2013
(51) Int. Cl.: F16H 47/04

(54) **HYDROMECHANICAL TRANSMISSION AND ASSEMBLIES**
HYDROMECHANISCHES GETRIEBE UND BAUGRUPPEN
TRANSMISSION HYDROMÉCANIQUE ET ENSEMBLES

(30) Priority: 02.05.2012 US 201261641467 P
(43) Date of publication of application: 11.03.2015
(73) Proprietor: Parker-Hannifin Corporation, Cleveland, Ohio 44124-4141 (US)
(72) Inventor: KOVACH, Joseph, Aurora, Ohio 44202 (US); SIMON, Herman, Paw Paw, Michigan 49079 (US); HORSFALL, Stephan, Auckland 1061 (NZ); RALPH, Brian, Grove City, Ohio 43123 (US); FINSEL, Thomas, Kalamazoo, Michigan 49009 (US); PHILLIPS, Christopher, Marcellus, Michigan 49067 (US); LOEFFLER, John, Olive Branch, Mississippi 38654 (US)
(74) Representative: Belcher, Simon James
(86) International application number: PCT/US2013/023048
(87) International publication number: WO 2013/165489

(56) References cited:
- EP-A1- 1 186 802
- EP-A1- 1 906 055
- EP-A1- 2 319 720
- EP-A2- 1 329 354
- GB-A- 2 065 801
- JP-A- 2003 011 684
- JP-A- 2007 290 705
- US-A- 3 528 322
- US-A1- 2012 046 138

## Description

### TECHNICAL FIELD

This invention relates generally to a connecting assembly for use in a hydromechanical transmission, and more specifically for use in a hydromechanical powersplit transmission for a hydraulic hybrid vehicle.

### BACKGROUND OF THE INVENTION

Hydromechanical transmissions, including hydromechanical powersplit transmissions, are used in hydraulic hybrid vehicles. Such vehicles may include a vehicle prime mover such as an internal combustion engine, at least one hydraulic pump motor unit, a gear set such as a planetary gear set, and an output shaft connecting the planetary gear set to a drive shaft of the vehicle. The internal combustion engine and the hydraulic pump motor unit are connected to the gear set, and the gear set splits power from the internal combustion engine and from the hydraulic pump motor unit in a motoring mode to rotate the drive shaft and propel the vehicle. The pump motor unit may also be used in a pumping mode to capture energy under certain conditions such as braking the vehicle, and the captured energy may be stored in an energy storage device such as a hydraulic accumulator to power the hydraulic pump motor unit in the motoring mode.

Various prior art configurations for hydromechanical powersplit vehicle transmissions may be used in off-highway vehicle applications such as agricultural tractors and wheel loaders or in on-highway applications such as delivery trucks. The ability of the powersplit transmission to provide infinitely variable speed allows the engine to run at its optimum efficiency conditions, while transmission of most power through the mechanical power path rather than through the hydraulic power path may result in relatively high transmission efficiency when hydraulic power is limited or not being used. Smooth and seamless control with uninterrupted transfer of torque from the prime mover and/or the hydraulic pump motor unit to the vehicle drive shaft may result in good performance when compared to manual and automatic transmissions having discrete gear ratios, while elimination of a hydrodynamic torque converter may help achieve efficiency when compared to automatic transmissions.

In transmissions of this type, and in hydromechanical components and assemblies and methods for use in such transmissions and elsewhere, technical problems include difficulties with system complexity, efficiency, size, weight, flexibility, lubrication of components, sump oil fill levels and heat build-up, assembly, repair, transmission of forces and torque in relatively large weight vehicles, and parking lock requirements. More specifically, these technical problems include alignment with other components of a vehicle such as the prime mover engine and the differential, ease of assembly, ease of installation in a vehicle and removal from the vehicle, space availability of the vehicle, space requirements of the transmission and within the transmission, weight of the transmission, smooth operation, transmission control, ease of disassembly and repair, and flexibility to change for use in a variety of different vehicles and different applications. Still more specifically, these technical problems include difficulty assembling and attaching and integrating the hydraulic components, including the hydraulic pump motor units and the controls and drive shafts for the hydraulic pump motor units and the hydraulic flow passages and ports for the hydraulic pump motor units, with the planetary gear set, including the drive gears and planetary gear set components, and assembling those components to the prime mover and differential of the vehicle. Further technical problems include lubrication of gear components, including size and complexity and efficiency of lubrication fluid pumps, and assembly and alignment of spline connections. Further technical problems include complexity of, and forces and stresses imposed on, parking lock mechanisms in relatively large weight vehicles.

EP2319720 describes a connecting assembly for a hydromechanical transmission that includes a front bearing wall detachably connected to the front side of a transmission case that accommodates a planetary gear unit, a flywheel housing connected to the transmission case, a hydraulic pump main body and a hydraulic motor main body.

### SUMMARY OF THE INVENTION

The present invention addresses certain of the aforementioned technical problems and provides a connecting assembly for use in a hydromechanical vehicle transmission as defined in claim 1. The connecting assembly according to the present invention may be used in a motor vehicle in place of a conventional manual or automatic transmission, connected directly to a conventional vehicle prime mover engine drive shaft and differential drive shaft, and situated between typical vehicle frame rails, while providing a configuration that is modular, compact, and capable of kinetic brake energy recovery, with good efficiency.

The connecting assembly of the invention integrates hydraulic components with gear set components in an integral assembly.

A hybrid vehicle hydromechanical or hydromechanical powersplit transmission includes a hydraulic unit housing having a sealed internal chamber and a gear unit housing having a separate internal chamber sealed from the hydraulic unit housing internal chamber. The hydraulic unit housing may be connected to the gear unit housing in longitudinally aligned relationship. The hydraulic unit housing may have a prime mover input shaft opening at its input end and at least one and preferably two variable displacement hydraulic pump motor units with pump motor unit drive shafts disposed within the hydraulic unit housing interior chamber in laterally offset relation to the prime mover input shaft opening. The variable displacement hydraulic pump motor units and their pump motor unit drive shafts may be in circumferentially spaced relation and in axially spaced relation to one another. The gear unit housing may have an output drive shaft opening at its output end extending longitudinally from the gear unit housing interior chamber and a gear unit having gear unit components. An input shaft may be disposed in the input shaft opening, and an output shaft may be disposed in the output shaft opening. The input shaft and the hydraulic pump motor unit drive shaft(s) and the output shaft may each be drivingly connected to one of the gear components. The input shaft opening, input shaft, output shaft opening and output shaft may be substantially coaxial, so that the transmission may be connected to a conventional vehicle prime mover engine and a conventional vehicle drive wheel differential. The gear unit may include a planetary gear set having planetary gear components. Various different hydraulic components may be used with various different gear set components, to provide flexibility for use in a wide variety of applications and vehicles.

A connecting plate can be positioned intermediate the hydraulic unit housing and the gear unit housing. One side of the connecting plate may provide a wall of the hydraulic unit housing interior chamber, and the other side of the connecting plate may provide a wall of the gear unit housing interior chamber. The hydraulic pump motor units and the gear set may be mounted on and carried by the connecting plate. The connecting plate may also provide a hydraulic manifold having fluid flow passages in fluid communication with each pump motor unit, and the connecting plate may include bearings for supporting rotating shafts including the pump motor unit drive shafts. One type of fluid may be disposed within the hydraulic unit housing interior chamber to provide a hydraulic fluid reservoir, and a different type of fluid with a different fluid level may be disposed within the planetary gear unit housing interior chamber to provide gear lubrication. Components of the hydraulic unit extend into the gear unit and provide integral portions of the gear unit, while portions of the gear unit provide integral portions of the hydraulic unit.

A motor vehicle with two laterally spaced apart longitudinally extending frame rails, can have the hydromechanical powersplit transmission disposed between the frame rails. The motor vehicle includes a drive shaft and a prime mover having a prime mover shaft, the drive shaft is axially aligned with and drivingly connected to the output shaft, and the prime mover shaft is axially aligned and drivingly connected to the input shaft.

The invention further provides the combinations set out in the accompanying claims. This Summary is not intended to identify key features or essential features of the claimed subject matter, and these and other features of the invention are more fully described and particularly pointed out in the description and claims set out below. The following description and claims and the annexed drawings set forth in detail certain illustrative embodiments of the invention, and these embodiments indicate but a few of the various ways in which the principles of the invention may be used.

### BRIEF DESCRIPTION OF THE DRAWINGS

The invention will now be described in further detail with reference to the accompanying drawings, in which:
Figure 1 is a schematic diagram of a wheeled land vehicle that includes a hydromechanical powersplit transmission according to a preferred construction;
Figure 2 is a more detailed enlarged view of a portion of the schematic diagram illustrated in Figure 1;
Figure 3 is a perspective view of the hydromechanical powersplit transmission illustrated schematically in Figure 1, as viewed from the front driver side of the vehicle in which the transmission is installed;
Figure 4 is a perspective view of the transmission illustrated in Figure 1, similar to Figure 3 but having a hydraulic unit housing removed from a central connecting plate;
Figure 5 is another perspective view of the transmission illustrated in Figure 1, as viewed from the rear driver side of the vehicle in which the transmission is installed, but having a planetary gear unit housing removed from the central connecting plate and having the planetary gear unit gears illustrated;
Figure 6 is a rear or output end view of the transmission illustrated in Figure 1;
Figure 7 is a cross sectional view taken along plane 7-7 in Figure 6;
Figure 8 is a cross sectional view taken along plane 8-8 in Figure 6;
Figure 9 is a cross sectional view taken along plane 9-9 in Figure 6;
Figure 10 is a cross sectional view taken along plane 10-10 in Figure 6;
Figure 11 is a perspective view of a front planetary gear unit housing for the planetary gear unit of the transmission illustrated in Figure 1, as viewed from the rear driver side of the vehicle in which the transmission is installed, and with all associated components removed for clarity;
Figure 12 is a perspective view of a rear planetary gear unit housing for the planetary gear unit of the transmission illustrated in Figure 1, as viewed from the front passenger side of the vehicle in which the transmission is installed, and with all associated components removed for clarity;
Figure 13 is an enlarged perspective view of a lubricating liquid baffle or trough for the planetary gear unit of the transmission illustrated in Figure 1;
Figure 14 is an exploded perspective view of a planetary gear and splash gear assembly for the planetary gear unit of the transmission illustrated in Figure 1, as viewed from the rear driver side of the vehicle in which the transmission is installed;
Figure 15 is a view similar to Figure 14, but showing the exploded components from Figure 14 in an assembled condition;
Figure 16 is a cross sectional view of the planetary gear and splash gear assembly illustrated in Figures 14 and 15, taken along reference view line 16-16 in Figure 15;
Figure 17 is an elevation view of the rear planetary gear unit housing illustrated in Figure 12, with some associated components installed and other associated components removed for clarity, as viewed from the front of the vehicle in which the transmission is installed, illustrating a park pawl assembly for the transmission illustrated in Figure 1;
Figure 18 is an enlarged view of a portion of the rear planetary gear housing shown in Figure 17, with a park pawl hub removed for clarity, illustrating the portion of the rear planetary gear housing and the park pawl assembly in cross section, and with the park pawl assembly in an engaged or locked position;
Figure 19 is a view similar to Figure 18, with the park pawl assembly in a disengaged or unlocked position;
Figure 20 is a cross sectional view taken along reference view line 20-20 in Figure 17, with the park pawl assembly in the engaged or locked position;
Figure 21 is a cross sectional view similar to Figure 20, with the park pawl assembly in the disengaged or unlocked position;
Figure 22 is an exploded perspective view illustrating a step in the method of assembling the transmission illustrated in Figure 1 and a subassembly of the transmission, as viewed from the passenger side front of the vehicle in which the transmission is assembled;
Figure 23 is an exploded perspective view illustrating another step in the method of assembling the transmission illustrated in Figure 1 and another subassembly of the transmission, as viewed from the passenger side front of the vehicle in which the transmission is assembled;
Figure 24 is an exploded perspective view illustrating another step in the method of assembling the transmission illustrated in Figure 1 and another subassembly of the transmission, as viewed from the passenger side front of the vehicle in which the transmission is assembled;
Figure 25 is a perspective view illustrating another step in the method of assembling the transmission illustrated in Figure 1 and another subassembly of the transmission, as viewed from the passenger side front of the vehicle in which the transmission is assembled;
Figure 26 is an exploded perspective view illustrating another step in the method of assembling the transmission illustrated in Figure 1 and another subassembly of the transmission, as viewed from the driver side rear of the vehicle in which the transmission is assembled;
Figure 27 is an exploded perspective view illustrating another step in the method of assembling the transmission illustrated in Figure 1 and another subassembly of the transmission, as viewed from the driver side rear of the vehicle in which the transmission is assembled;
Figure 28 is an exploded perspective view illustrating another step in the method of assembling the transmission illustrated in Figure 1 and another subassembly of the transmission, as viewed from the passenger side rear of the vehicle in which the transmission is assembled;
Figure 29 is an exploded perspective view illustrating another step in the method of assembling the transmission illustrated in Figure 1 and another subassembly of the transmission, as viewed from the driver side rear of the vehicle in which the transmission is assembled;
Figure 30 is an exploded perspective view illustrating another step in the method of assembling the transmission illustrated in Figure 1 and another subassembly of the transmission, as viewed from the driver side rear of the vehicle in which the transmission is assembled;
Figure 31 is an exploded perspective view illustrating another step in the method of assembling the transmission illustrated in Figure 1 and another subassembly of the transmission, as viewed from the driver side rear of the vehicle in which the transmission is assembled;
Figure 32 is an exploded perspective view illustrating another step in the method of assembling the transmission illustrated in Figure 1 and another subassembly of the transmission, as viewed from the driver side rear of the vehicle in which the transmission is assembled;
Figure 33 is a diagrammatic flow chart, illustrating the steps of the method of assembling a transmission according to the present invention;
Figure 34 is a cross sectional side elevation view of the primary pump motor drive shaft and its associated drive gear for the transmission illustrated in Figure 1, illustrating a spline connection according to the present invention in a fully assembled configuration;
Figure 34a is an enlarged view of a portion of Figure 34, illustrating the spline connection in a first partially assembled configuration;
Figure 34b is a view similar to Figure 34a, illustrating the spline connection in a second partially assembled configuration;
Figure 35 is a cross sectional view of the primary pump motor unit drive gear illustrated in Figure 34;
Figure 36 is a cross sectional view of the primary pump motor unit drive shaft illustrated in Figure 34;
Figure 37 is a perspective view of the primary pump motor unit drive shaft and its associated drive gear illustrated in Figure 34, showing these components before they are assembled together;
Figure 38 is another perspective view of the primary pump motor unit drive shaft and its associated drive gear illustrated in Figure 34, showing these components in a fully assembled configuration.

### DETAILED DESCRIPTION OF THE DRAWINGS

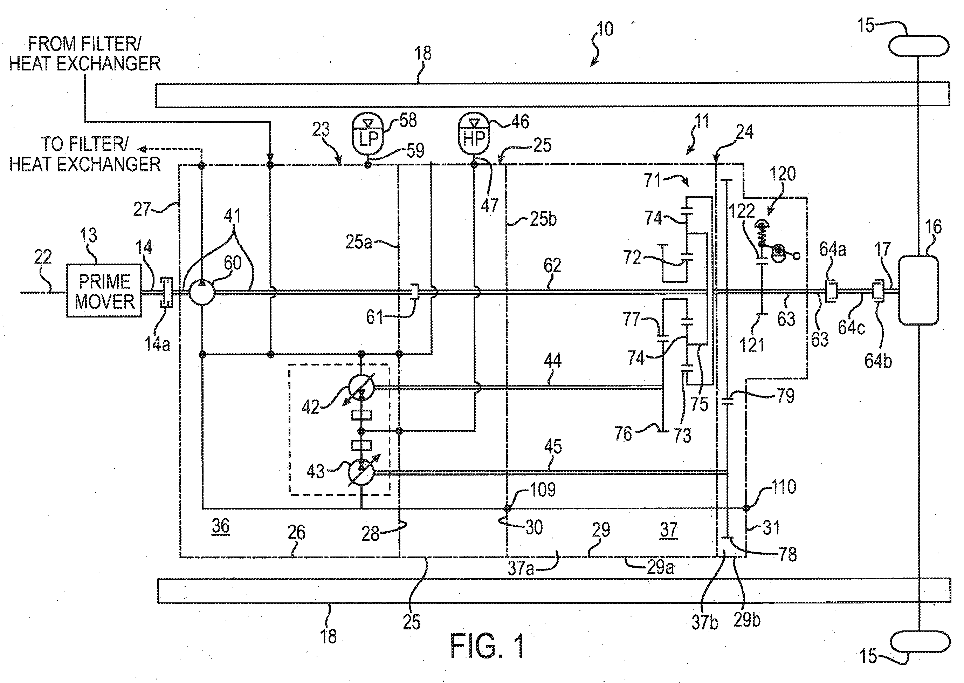

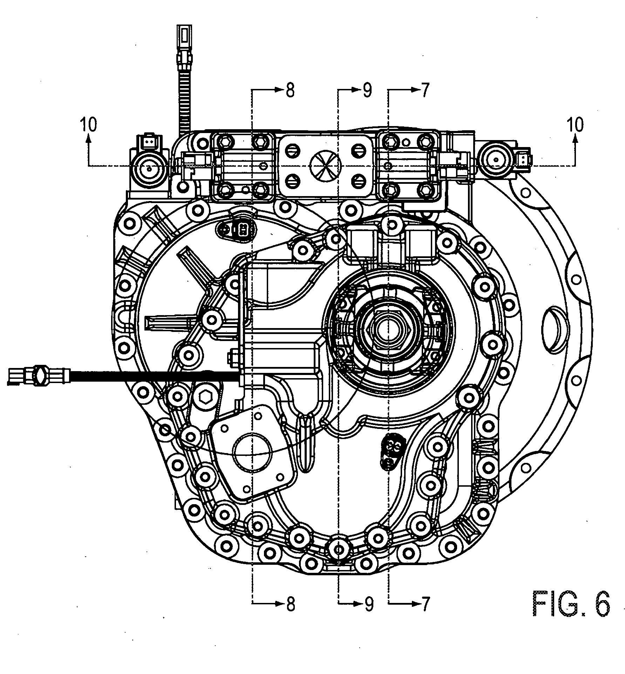

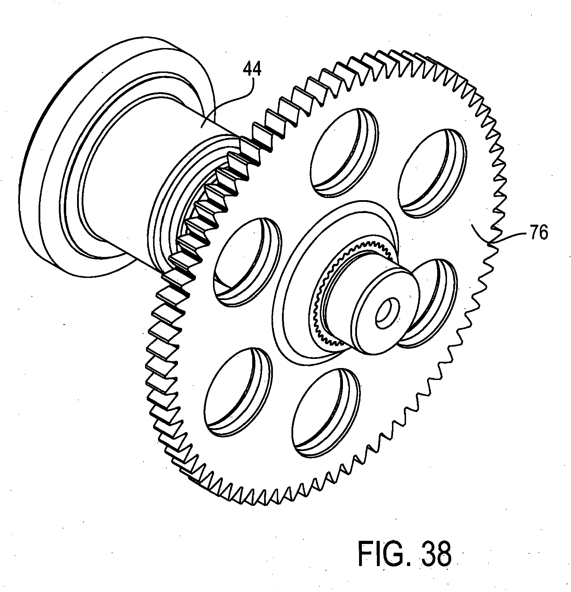

Referring now to the drawings in greater detail, Figures 1-38 illustrate an object 10 having a compact hydromechanical powersplit transmission 11 according to a preferred construction and a method of assembly 140 according to a preferred construction.

Headings are provided in the description below to assist the reader. However, descriptions under all headings relate to the descriptions under each individual heading, so that the complete description below is to be used to understand the description under each individual heading.

### OVERALL STRUCTURE AND OPERATION

The object 10 can be any object that uses a transmission for transmitting energy or converting energy to rotational movement. In the preferred construction the object 10 is a wheeled land vehicle such as an on-highway truck. The vehicle 10 includes a prime mover 13, which in the preferred construction is a conventional internal combustion engine such as a gasoline or diesel or natural gas engine, and an engine drive shaft 14. The vehicle 10 further includes drive wheels 15, a differential 16, and a differential drive shaft 17. The vehicle 10 also includes frame rails 18, which are longitudinally extending beams, which may be steel or other suitable structural material, to which the body (not shown), prime mover 13, drive shaft 14, vehicle suspension components (not shown), differential 16 and other components of the vehicle 10 are mounted in a conventional well know manner.

As best shown in Figures 1, 3, and 7, the hydromechanical powersplit transmission 11 has a longitudinal axis 22. The transmission 11 includes a hydraulic unit 23, a gear unit or planetary gear unit 24 that is integral with the hydraulic unit 23, and a connecting plate 25 disposed intermediate the hydraulic unit 23 and the gear unit 24. As used herein, the term integral means two or more functionally different cooperating devices that are assembled without externally exposed fluid or mechanical connections and used as a whole such that each device is an essential part to complete the other. The hydraulic unit 23 includes a hydraulic unit housing 26 having a vehicle prime mover input end 27 and an output end 28. The gear unit 24 includes a gear unit housing or planetary gear unit housing 29 having an input end 30 and an output end 31. The housings 26 and 29 include exterior surfaces 32 and 33 and interior surfaces 34 and 35, respectively. Interior surfaces 34 and 35 cooperate with connecting plate 25 to define chambers 36 and 37, respectively, that are sealed from one another and from the exterior surfaces 32 and 33. The chambers 36 and 37 are in longitudinally aligned relationship to one another along longitudinal axis 22. Various low pressure hydraulic connections through the chamber 36 are illustrated schematically in Figure 1 with solid lines. It should be understood that these illustrated solid lines are not separate hydraulic conduits, but rather schematically illustrate hydraulic connections that occur between various components through the low pressure hydraulic fluid within chamber 36.

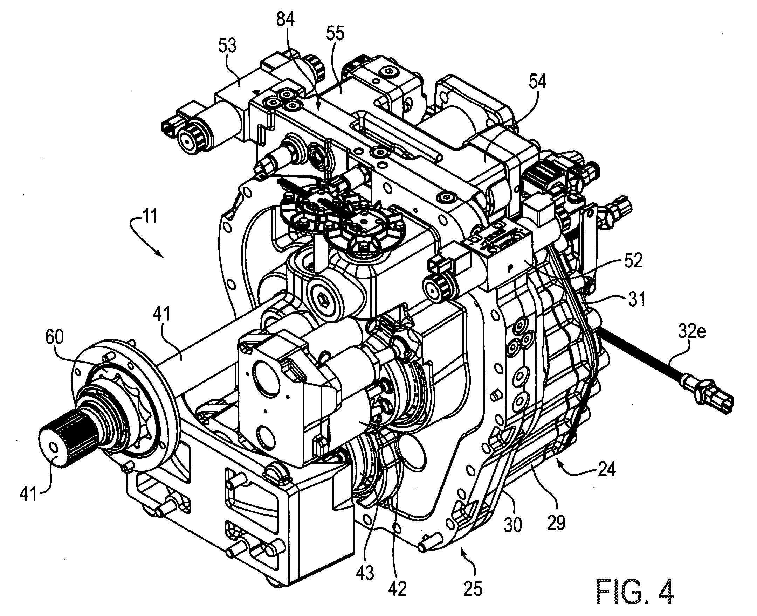

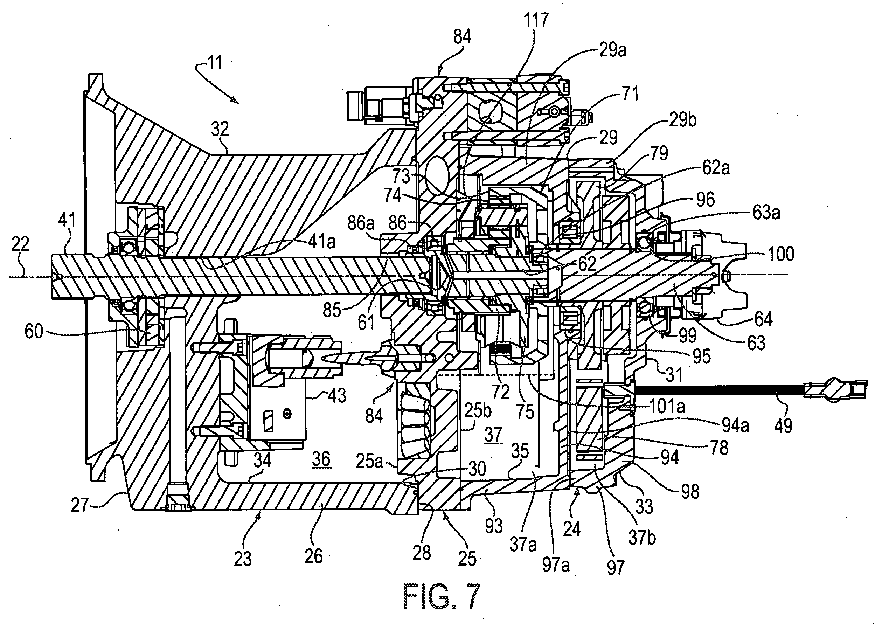

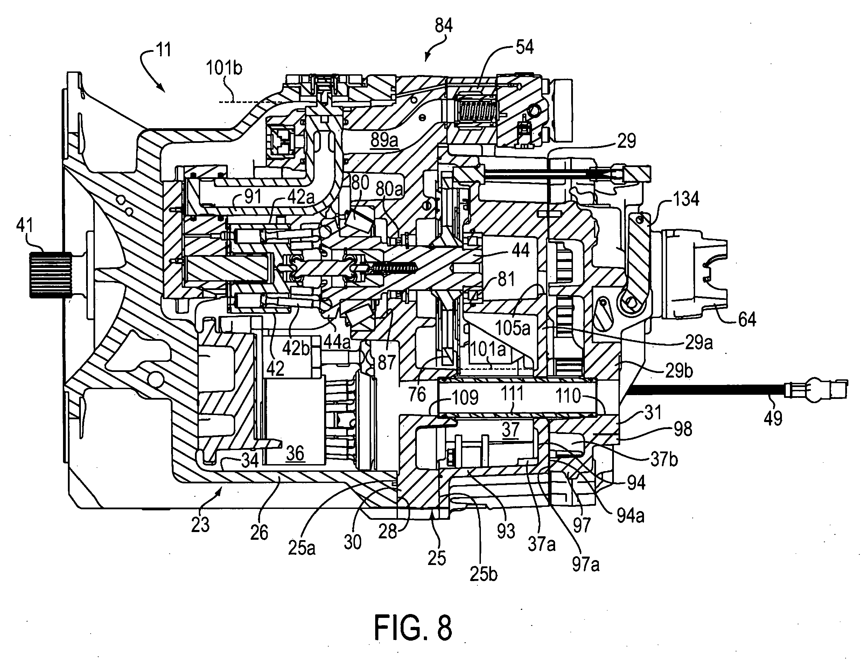

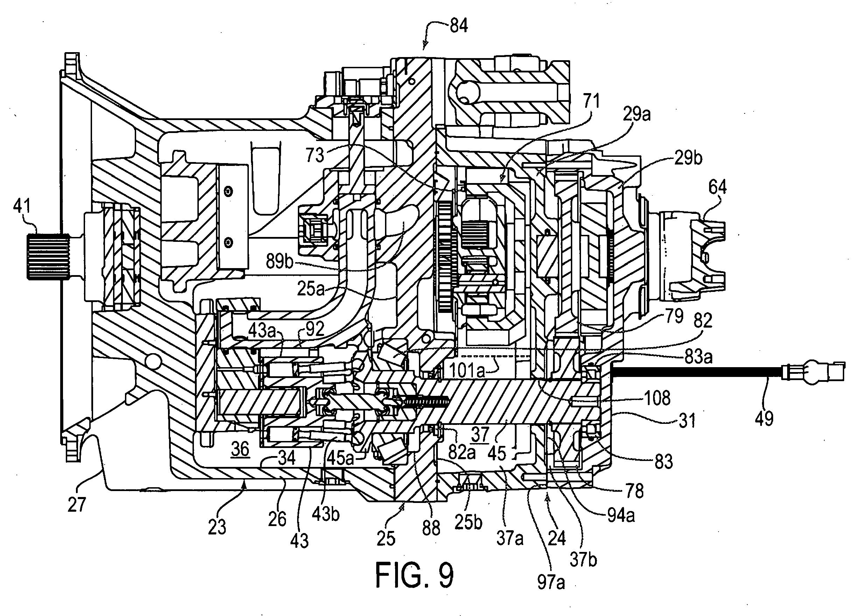

The hydraulic unit housing 26 includes a longitudinally extending prime mover input shaft or mechanical drive shaft 41 connected to engine drive shaft 14 through a suitable torsional vibration dampening coupling 14a. Input shaft 41 (Figures 1 and 7) extends through an input shaft opening 41 a at the input end 27, longitudinally into and through the hydraulic unit housing interior chamber 36. The input shaft 41 is rotatably connected to the prime mover 13, so that the prime mover 13 drives the input shaft 41 and causes the input shaft 41 to rotate when the prime mover 13 is running. The term rotatably connected means that components rotate together or are drivingly connected. A primary hydraulic pump motor unit 42 and a secondary hydraulic pump motor unit 43 (Figures 1, 8 and 9) are disposed within the chamber 36 in laterally offset spaced relation to the input shaft 41 and in circumferentially spaced relation to one another. This laterally offset relationship of the units 42 and 43 to the input shaft 41, as further described below, allows the input shaft 41 to extend longitudinally through the hydraulic unit housing interior chamber 36 and into connecting plate 25 without interruption. Further, as illustrated in Figures 4 and 8, the pump motor units 42 and 43 are longitudinally offset from one another, with the pump motor unit 43 including its barrel and pistons described below being closer to the connecting plate 25 and gear unit 24 than the pump motor unit 42, to reduce the lateral dimension of the transmission 11. The units 42 and 43 in the preferred construction are identical and are preferably bent axis, variable displacement, axial piston type pump motor units of the type disclosed in World Intellectual Property Organization publication number WO 2012/016240 A2. Alternatively, the size, displacement or type of the pump motor units 42 and 43 may be different from one another and/or may be different from that illustrated in the preferred construction. For example, primary pump motor unit 42 may be a smaller displacement unit than secondary unit 43. For brevity, the detailed structure and operation of the pump motor units 42 and 43 as disclosed in the referenced publication are not repeated in detail herein. Primary pump motor unit 42 includes a barrel 42a and pistons 42b, and secondary pump motor unit 43 includes a barrel 43a and pistons 43b. The pump motor units 42 and 43 each operate in a pumping mode or in a motoring mode during the operation of the transmission 11, as further described below. The primary pump motor unit 42 is drivingly connected to primary pump motor unit drive shaft 44 (Figures 1 and 8), and the secondary pump motor unit 43 is drivingly connected to secondary pump motor unit drive shaft 45 (Figures 1 and 9). The primary shaft 44 includes an integral annular head portion having sockets 44a for its associated pistons 42a, and the pistons 42a and associated barrel 42b provide a rotating group for the primary unit 42. The secondary shaft 45 includes an integral annular head portion having sockets 45a for its associated pistons 43a, and the pistons 43a and associated barrel 42b provide a rotating group for the secondary unit 43. During the pumping mode, the units 42 and/or 43 are driven by primary pump motor unit drive shaft 44 and secondary pump motor unit drive shaft 45, respectively, to pump hydraulic fluid under pressure into a high pressure accumulator 46 (Figure 1) through a hydraulic line 47 to store energy. During the motoring mode, high pressure hydraulic fluid is supplied to the units 42 and/or 43 from high pressure accumulator 46 through hydraulic line 47 to rotate the shafts 44 and 45 to convert stored energy from accumulator 46 to rotational movement. The primary and secondary pump motor unit drive shafts 44 and 45 are also disposed in radially offset relation to the prime mover input shaft 41 and in circumferentially and longitudinally spaced relation relative to one another. The high pressure accumulator 46 may be mounted remotely to the vehicle frame rails 18, or alternatively may be mounted directly to the transmission 11.

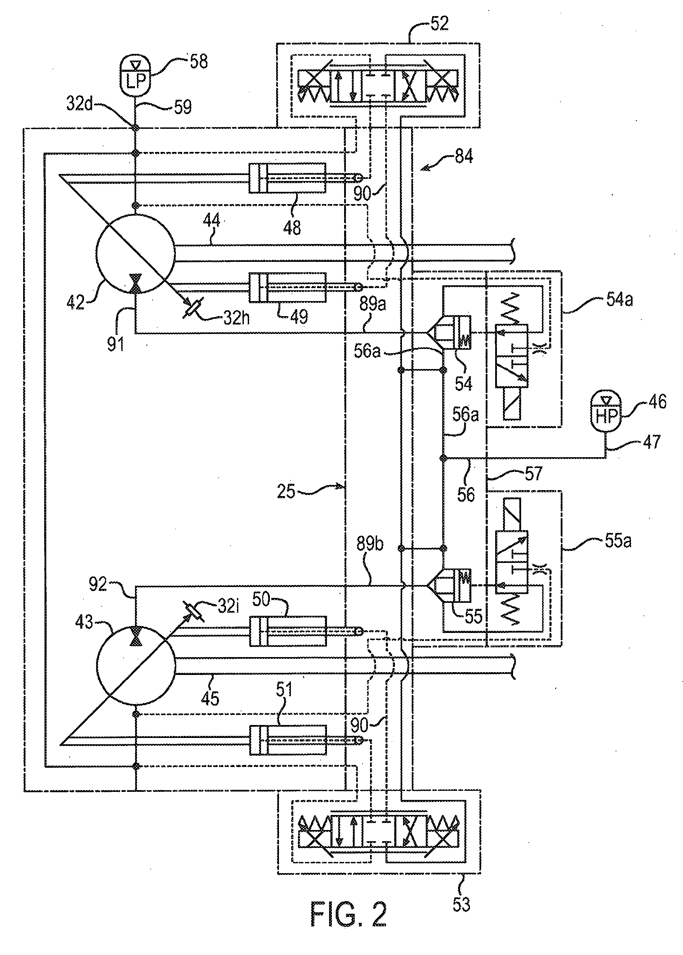

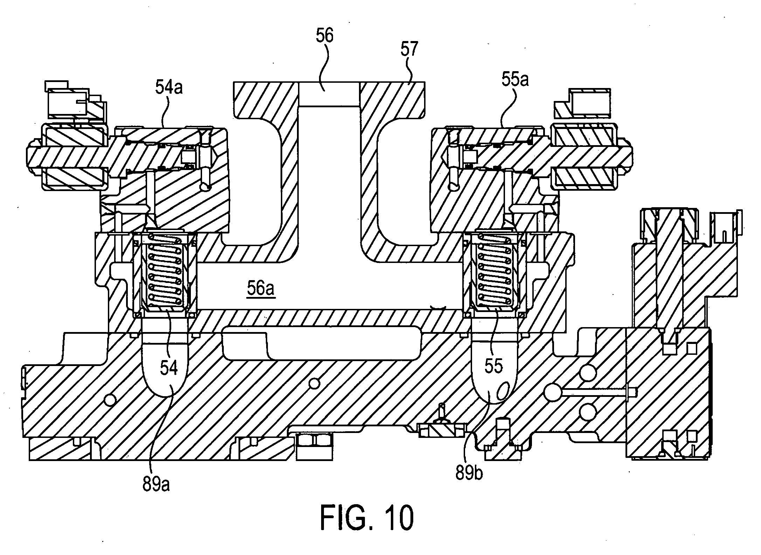

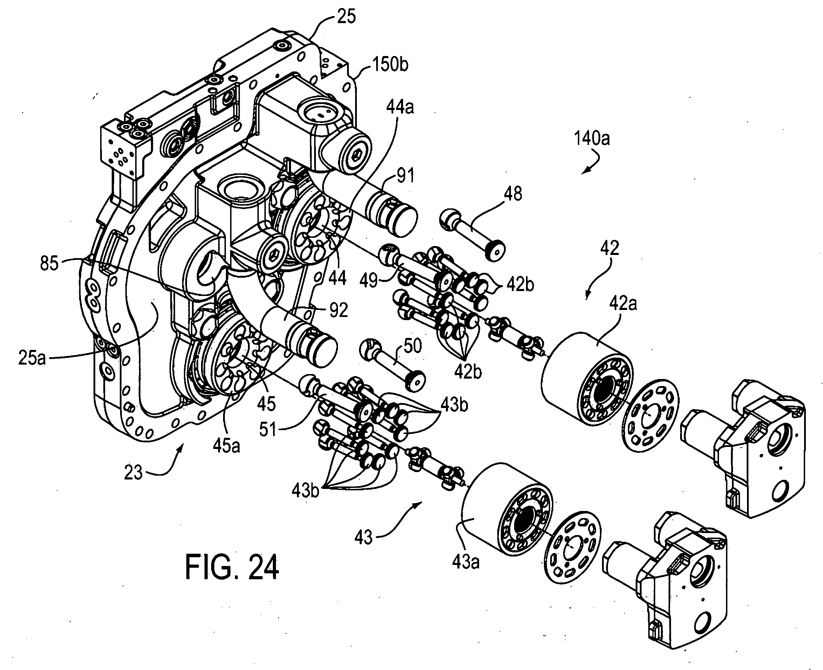

Figure 2 is an enlarged and more detailed schematic illustration of the portion of Figure 1 illustrated by the dotted line box that surrounds the pump motor units 42 and 43 in Figure 1. As illustrated schematically in Figure 2 and as shown and described in detail in the above referenced publication, the displacement of primary pump motor unit 42 is controlled by a displacement control mechanism including setting or control pistons 48 and 49 (also see Figure 24). Similarly, the displacement of secondary pump motor unit 43 is controlled by setting or control pistons 50 and 51 (also see Figure 24). The primary pump motor unit control pistons 48 and 49 are set or controlled by electrohydraulic proportional control valve 52, and the secondary pump motor unit control pistons 48 and 49 are set or controlled by electrohydraulic proportional control valve 53. An isolation valve 54 is arranged to block or open fluid communication between primary pump motor unit 42 high pressure outlet 91 and a high pressure isolation valve port 56 connected to hydraulic line 47 leading to high pressure accumulator 46. An isolation valve 55 is arranged to block or open fluid communication between secondary pump motor unit 43 and high pressure isolation valve port 56. The isolation valves 54 and 55 are closed or open in response to pilot signals from electrically operated isolation pilot signal valves 54a and 55a, respectively, and the valves 54 and 55 are disposed in a single housing 57 (Figure 10) that includes the high pressure fluid port 56 connected to high pressure line 47 leading to high pressure accumulator 46. The isolation valve housing 57 further includes passages 56a connecting the isolation valve high pressure port 56 with each of the isolation valves. As shown in Figure 1, a low pressure reservoir 58 is connected to pump motor units 42 and 43 through low pressure hydraulic line 59 and chamber 36. A filtration and cooling pump 60 (also see Figure 4) is driven by input shaft 41 and circulates hydraulic fluid from low pressure line 59 and chamber 36 through connections 32a and 32b to and from a hydraulic fluid filter (not shown) and a heat exchanger (not shown). Alternatively, pump 60 may be driven in any other suitable manner such as, for example, by a suitable gear set.

As best illustrated in Figures 1 and 7, a coupling 61 in the connecting plate 25 couples the prime mover input shaft 41 to a transfer shaft 62, so that the input shaft 41 and transfer shaft 62 rotate together as a unit. Alternatively, coupling 61 may be in any other suitable location such as, for example, outside of and on either side of the connecting plate 25. Coupling 25 is integral to the transfer shaft 62 in the preferred construction but may alternatively be integral to the shaft 41 or a separate component. The transfer shaft 62 extends longitudinally from connecting plate 25 into the planetary gear housing interior chamber 37, so that the transfer shaft 62 may be considered a part of and/or an extension of input shaft 41. The right end of the transfer shaft 62 is rotatably journaled or supported in a bearing 62a in a blind bore in the left end of a planetary gear unit output drive shaft 63 at the output end 31 of the planetary gear unit housing 29, so that the transfer shaft 62 is not drivingly coupled to the output drive shaft 63 but instead rotates relative to the output drive shaft 63. The output drive shaft 63 extends from the planetary gear unit housing interior chamber 37 longitudinally through an output drive shaft opening 63a in gear unit housing 29 and is connected to the differential drive shaft 17 by a coupling 64.

As illustrated schematically in Figure 1 and described in more detail below, the gear unit or planetary gear unit 24 includes gear unit components 71 disposed within the gear unit housing interior chamber 37. The gear unit components 71 are planetary gear components, and the components 71 include a sun gear 72, a ring gear 73, planet gears 74 and a planet carrier 75. The prime mover 13 is drivingly connected to the planet carrier 75. The primary pump motor unit 42 is drivingly connected to the sun gear 72. The secondary pump motor unit 43 is drivingly connected to the ring gear 73 and to the drive wheels 15.

More specifically, as illustrated in Figures 1 and 7, the planet carrier 75 is drivingly connected to transfer shaft 62, preferably by a spline connection, so that transfer shaft 62 and input shaft 41 and engine drive shaft 14 and prime mover 13 are drivingly connected and rotate together. Alternatively, one or more of the several spline connections illustrated herein may be replaced with any other suitable attachment device such as, for example, a key and slot arrangement or by a single piece construction. As illustrated in Figures 1 and 8, primary pump motor unit drive shaft 44 extends into planetary gear unit interior chamber 37 and carries a gear 76 through a spline connection. Gear 76 drives gear 77, which drives sun gear 72 through a spline connection. As illustrated in Figures 1 and 9, secondary pump motor unit drive shaft 45 is drivingly connected to ring gear 73 and to output shaft 63 and differential drive shaft 17 and differential 16 and drive wheels 15, so that these components rotate together. Specifically, secondary pump motor unit drive shaft 45 extends into planetary gear unit interior chamber 37 and carries a gear 78 through a spline connection, and gear 78 meshes with gear 79 that is connected to ring gear 73 and to output shaft 63.

Referring to Figures 1 and 8, the primary pump motor shaft 44 extends longitudinally from the rotating axial piston group 42a, 42b of its associated primary pump motor unit 42 in interior chamber 36 of hydraulic unit 23, through the connecting plate 25, and into the interior chamber 37 of planetary gear unit 24. The left end of the primary pump motor unit shaft 44 is supported by a tapered roller bearing 80 in the connecting plate 25 to accommodate radial and axial loads on the shaft 44, and the right end of the shaft 44 is supported by a roller bearing 81 in housing 29 of planetary gear unit 24. The gear 76 that is carried by the primary pump motor unit shaft 44 is disposed intermediate the bearings 80 and 81 and adjacent the bearing 81. Similarly, as shown in Figures 1 and 9, the secondary pump motor shaft 45 extends longitudinally from the rotating axial piston group 43a, 43b of its associated secondary pump motor unit 43 in interior chamber 36 of hydraulic unit 23, through the connecting plate 25, and into the interior chamber 37 of planetary gear unit 24. The left end of the secondary pump motor unit shaft 45 is supported by a tapered roller bearing 82 in the connecting plate 25 to accommodate radial and axial loads, and the right end of the shaft 45 is supported by a roller bearing 83 in a blind bore 83a in housing 29 of planetary gear unit 24. The gear 78 that is carried by the secondary pump motor unit shaft 45 is disposed intermediate the bearings 82 and 83 and adjacent the bearing 83. This arrangement integrates the pump motor units 42 and 43 and their associated shafts 44 and 45 into the hydraulic unit 23 and the connecting plate 25 and the planetary gear unit 24 to provide an integral unit. By supporting the ends of the shafts 44 and 45 in this manner in bearings in the connecting plate 25 and planetary gear unit housing 29 and with the associated gears 76 and 78, respectively, disposed on the shafts 44 and 45 intermediate their support bearings, smaller diameter pump motor unit shaft diameters and shorter axial length pump motor unit shafts are achieved to reduce the size and weight of the transmission 11.

Referring now to Figures 1-2 and 7-9 to further describe the connecting plate 25, the connecting plate 25 is of high strength cast iron and the hydraulic housing 26 and planetary gear unit housing 29 are of lower strength and lower weight aluminum casting. The material for the connecting plate 25 and housings 26 and 29 may alternatively be of other suitable materials. The connecting plate 25 provides a major structural element of the transmission 11, and a connecting assembly 84 includes the connecting plate 25 and the hydraulic components and gear set components that are assembled to and carried by the connecting plate 25. The connecting plate 25 has a hydraulic unit side that includes a hydraulic unit wall 25a that provides a wall of hydraulic unit sealed chamber 36 adjacent the output end 28 of the hydraulic unit 23. The connecting plate 25 also has a planetary gear unit side that includes a planetary gear unit wall 25b that provides a wall of planetary gear unit sealed chamber 37 adjacent the input end 30 of planetary gear unit 24. A mechanical drive opening 85 (Figure 7) extends longitudinally through the connecting plate 25 from the hydraulic side 25a to the gear set side 25b, and a bearing 86 and seal 86a are disposed in the opening 85. The input mechanical drive shaft 41 (including its transfer shaft 62) extends longitudinally into the opening 85 and is supported by the bearing 86a and sealed by the seal 86b. A primary hydraulic drive opening 87 (Figure 8) extends longitudinally through the connecting plate 25 from the hydraulic side 25a to the gear set side 25b. The primary opening 87 is in laterally offset relation to the opening 85 and input shaft 41, and the primary pump motor unit shaft bearing 80 and associated seal 80a are disposed in the opening 87. The primary pump motor unit 42 is secured to the connecting plate 25 on its hydraulic side 25a and is longitudinally aligned with the opening 87. The primary pump motor unit drive shaft 44 extends longitudinally through the opening 87 and is supported by the bearing 80 and sealed by the associated seal 80a. A secondary hydraulic drive opening 88 (Figure 9) extends longitudinally through the connecting plate 25 from the hydraulic side 25a to the gear set side 25b. The secondary opening 88 is also in laterally offset relation to the opening 84 and input shaft 41, and the secondary pump motor unit shaft bearing 82 and associated seal 82a are disposed in the opening 88. The secondary pump motor unit 43 is secured to the connecting plate 25 on its hydraulic side 25a and is longitudinally aligned with the opening 88. The secondary pump motor unit drive shaft 45 extends longitudinally through the opening 88 and is supported by the bearing 82 and sealed by seal 82a. The connecting assembly 84 further includes the planetary gear set 71, which is mounted on the gear set side 25b of the connecting plate 25. This configuration provides an input drive shaft 41, 62 that extends longitudinally from end to end through the sealed chamber 36 of hydraulic unit 23 and through the connecting plate 25, and primary and secondary pump motor units 42 and 43 that are each disposed in the sealed chamber 36 and are laterally offset from the drive shaft 41, 62 and circumferentially and longitudinally spaced from one another.

The connecting plate 25 of the connecting assembly 84 provides a hydraulic manifold and further includes fluid flow passages that include high pressure fluid flow passages 89a and 89b and pilot signal passages 90. The high pressure fluid outlet side of each hydraulic pump motor unit 42 and 43 includes a high pressure fluid outlet or flow tube 91 (Figures 1 and 8), 92 (Figures 1 and 9), respectively, and the flow tubes 91 and 92 are further described in the above referenced publication. The passages 89a and 89b in the connecting plate 25 connect each of the isolation valves 54, 55 with an associated one of the pump motor units, so that the flow tubes 91 and 92 are each connected in fluid communication to the isolation valves 54 and 55. The valves 52, 53, 54 and 55 are secured to and mounted on the connecting plate 25, and the pilot fluid passages 90 are in fluid communication with these valves.

In this manner, the connecting plate 25 is a component of a connecting assembly 84 and provides a mounting platform for the pump motor units 42 and 43 and for the valves 52, 53, 54, and 55; provides support and bearings for the pump motor unit shafts 44 and 45; provides bearings for the transfer shaft 62 and support for the transfer shaft 62 and input shaft 41; provides a mounting platform for the planetary gear components 71; provides a wall for the hydraulic unit internal chamber 36 and for the planetary gear unit internal chamber 37; combines the hydraulic unit 23 and the planetary gear unit 24 into an integral unit; and provides a high pressure hydraulic manifold for the fluid connections between and among the high pressure accumulator 46, valves 52, 53, 54, and 55, setting pistons 48, 49, 50 and 51, and pump motor units 42 and 43 and their associated rotating piston groups and high pressure flow tubes 91, 92. The illustrated components in the hydraulic unit 23, such as for example the pump motor units 42 and 43, may be replaced with different components and used with the gear unit 24 or with a different gear unit. Similarly, the illustrated components in the gear unit 24, such as for example the planetary gear components 71 and drive gears, may be replaced with different components and used with the hydraulic unit 23 or with a different hydraulic unit. This enables the transmission 11 to be used in a wide variety of vehicles and applications.

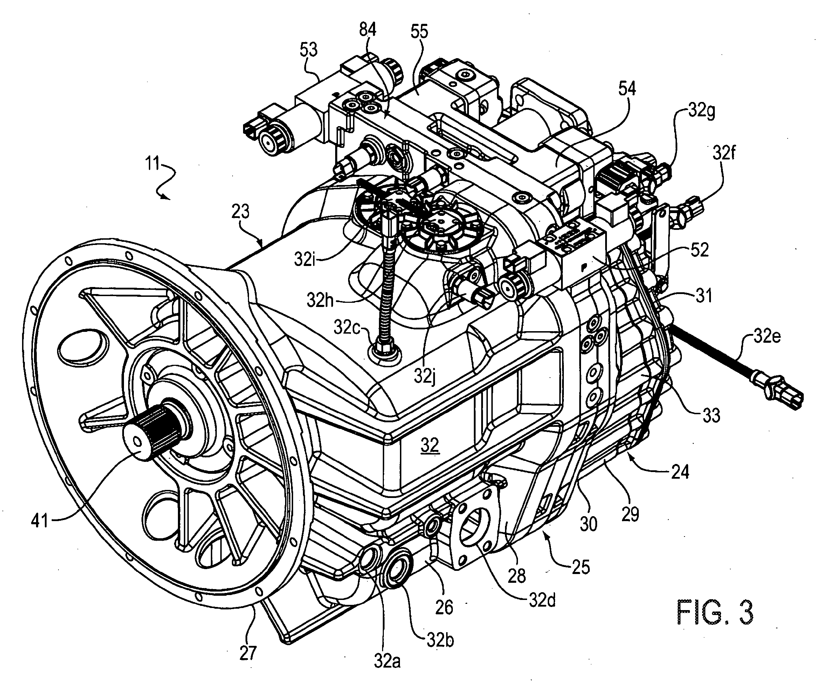

As best illustrated in Figure 3, the exterior surfaces 32 and 33 of housings 26 and 29 provides several connections used for the transmission 11. For example, exterior surfaces 32 and 33 provide liquid filter and cooler supply and return ports 32a and 32b, liquid sensor temperature port 32c, auxiliary low pressure return port 32d, park pawl position sensor connection 32e, secondary pump motor unit speed sensor connection 32f, primary pump motor unit speed sensor connection 32g, primary and secondary pump motor unit displacement sensor 32h and 32i, and hydraulic unit low pressure sensor 32j.

Once the transmission 11 is assembled in the configuration illustrated in the drawings and described above, the transmission 11 is installed in the vehicle 10 in the lateral space between the frame rails 18 and in the longitudinal space between the prime mover drive shaft 14 and the differential drive shaft 17 (Figure 1). The prime mover draft shaft 14 is connected through the torsional vibration dampening coupling 14a to the input shaft 41 of the transmission 11. The differential drive shaft 17 is connected to the output drive shaft 63 of the transmission 11 through the couplings 64a and 64b and shaft 64c. The appropriate electrical connections are made between the control systems of the vehicle 10 and the electrical components of the transmission 11, and the appropriate connections are made between the hydraulic components of the vehicle 10 (including the accumulators 46 and 47) and the transmission 11. In this installed configuration, the prime mover drive shaft 14, hydraulic unit prime mover input shaft 41, input opening 41 a, transfer shaft 62, planetary gear unit output drive shaft 63, output drive shaft opening 63a, and differential drive shaft 17 are in axially aligned or coaxial relationship. All of the components of the hydraulic unit 23 including the pump motor units 42 and 43, and all of the components of the connecting plate 25 including the hydraulic manifold high pressure port 56 and passages 89 and 90 and control valves 52-55, and all of the components of the planetary gear unit 24 including the planetary gear components 71 and drive gears 76, 78 and 79, are disposed laterally between the frame rails 18 and longitudinally between the drive shafts 14 and 17. In this manner, the hydromechanical powersplit transmission 11 may be installed in the vehicle 10 in place of a conventional manual or automatic or variable transmission without substantial alteration of this space or the components of the vehicle 10 that define this space.

Turning now the operation of the transmission 11, the transmission 11 operates in various modes under a wide variety of conditions. For example, the transmission 11 operates in various modes in response to vehicle operator accelerator pedal input to transmit power from the prime mover 13 and/or from stored energy in the high pressure accumulator 46 to the differential drive shaft 17 to propel the vehicle 10. Further, the transmission 11 operates in various modes in response to vehicle operator brake pedal input to capture energy from the vehicle 10 during braking of the vehicle 10 and to transmit the captured energy to the high pressure accumulator storage device 46 for later use. Still further, the transmission 11 operates in response to vehicle operator input to start the prime mover 13 using stored energy in the accumulator storage device 46 when the vehicle 10 is stationary.

To select among a virtually infinite array of the above described operating modes of the transmission 11, the displacement and pump or motor operating mode of pump motor units 42 and 43 may be changed and the isolation valves 54 and 55 may be opened or closed. For example, when the secondary unit 43 is to be used in a pumping mode during braking to charge the accumulator 46, an input provided to the pilot valve 55a may allow the isolation valve 55 to close. In this mode of operation, the isolation valve 55 for the secondary pump motor unit 43 may act as a check valve, so that the isolation valve 55 opens when pressure in the outlet tube 92 exceeds the pressure in the high pressure accumulator 46 to allow pressure from unit 43 to charge accumulator 46. The isolation valve 54 for the primary pump motor unit 42 may be generally opened when the vehicle 10 is moving, except closed when the secondary unit 43 is pumping during braking to prevent supply of fluid from the secondary unit 43to the primary unit 42.

When the vehicle 10 is stationary, the isolation valve 54 for the primary unit 42 may be closed, to prevent unintended flow to the secondary unit 43 and unintended movement of the vehicle 10. The transmission 11 may also be used to start the engine 13, to eliminate the need for a conventional starter. For this mode, hydraulic fluid from accumulator 46 is supplied to primary pump motor unit 42 and isolated from secondary pump motor unit 43, so that unit 43 and its drive shaft 44 rotate to rotate gears 76, 77, 72 and 74 to rotate planet carrier 75 and transfer shaft 62 and input shaft 41 and drive shaft 14 to rotate and start prime mover engine 13 (Figure 1).

Further, the proportional control valves 52 and 53 adjust the displacement of the units 42 and 43 during both pumping and motoring modes. For example, when movement of vehicle 10 is initially started from a stopped position, fluid is supplied from accumulator 46 to secondary unit 43 and displacement of unit 43 is gradually increased to accelerate vehicle 10. As speed of the vehicle 10 increases and displacement of unit 43 increases, fluid pressure from accumulator 46 decreases and less stored energy is available to unit 43 to continue to drive vehicle 10. As the speed of the vehicle further increases, more power is transmitted mechanically directly from the engine 13 to driveshaft 17 through the planetary gearset 71, while less power is transmitted by the hydraulic pump motor units. By reducing the hydraulic power transmitted at higher vehicle speeds, the overall transmission efficiency is increased. Additionally, the displacements of pump motors 42 and 43 are steplessly adjusted to achieve a desired output shaft speed for a given input prime mover input shaft speed. The adjusting of displacement provides for an infinitely variable or stepless transmission ratio, which allows the prime mover 13 to be operated at its most efficient operating speed regardless of output shaft speed. Additionally, since there is no gear shifting, there is no interruption in power. Under this condition, displacement of units 42 and 43 may be set to zero, to minimize any drag or inefficiency caused by units 42 and 43. When vehicle 10 is to brake, secondary unit 43 is operated in a pumping mode and displacement of unit 43 is increased to pump more fluid into accumulator 46 and cause further braking resistance to the drive wheels 15 until the desired slower speed or stopped condition for the vehicle 10 is achieved. During operation of the transmission 11, the sealed hydraulic unit chamber 36 is maintained at a positive pressure of at least about 2 bar and preferably in the range of about 2 bar to about 6 bar, to prevent cavitation in the pump motor units 42 and/or 43 during pumping, while the sealed gear unit chamber 37 is maintained at about atmospheric pressure. Because the pump motor units 42 and 43 are disposed in chamber 36 which is the low pressure reservoir, separate low pressure conduits and connections between the low pressure reservoir and the pump motor units 42 and 43 are not required.

In this manner, the transmission 11 provides a hydromechanical powersplit transmission that captures and stores energy as high pressure fluid in accumulator 46 during vehicle braking and that uses that stored energy to propel the vehicle 10 or to start engine 13. Further, when the vehicle 10 is to be propelled when stored energy in accumulator 46 is depleted, a direct variable speed mechanical connection is provided from engine 14, through hydraulic unit 23 but without pumping or motoring displacement of the units 42 and 43, through the planetary gear set 71 and to the drive wheels 15.

### GEAR UNIT DOUBLE SUMP

Referring now to Figures 1 and 7-9, the planetary gear unit housing 29 includes a front gear unit housing 29a and a rear gear unit housing 29b. The sealed interior chamber or sump 37 of the planetary gear unit 24 includes a front chamber or front sump 37a and a rear chamber or rear sump 37b. The primary hydraulic pump motor unit drive shaft 44 extends from the hydraulic side 25a, through the connecting plate 25, to the front chamber 37a, where its associated gear 76 is drivingly connected to the sun gear 72 through gear 77 (Figures 1 and 8). The planetary gear components 71, including sun gear 72, ring gear 73, planet gears 74 and planet carrier 75 and the gear 76 provide a first gear set all disposed within front chamber or sump 37a. The mechanical or prime mover input shaft 41 with its transfer shaft 62 extends from the hydraulic side 25a, through the connecting plate 25, to the front sump 37a, where the transfer shaft is drivingly connected to the planet carrier 75 (Figures 1 and 7). The secondary hydraulic pump motor unit drive shaft 45 extends from the hydraulic side 25a, through the connecting plate 25, through the front sump 37a, to the rear sump 37b. In the rear sump 37b, the gear 78 is secured on the secondary pump motor unit drive shaft 45 and is drivingly connected to gear 79 (Figures 1 and 9). Gear 79 in turn is connected to output drive shaft 63 in rear chamber 37b and to ring gear 73. Gears 78 and 79 provide a second gear set disposed in the rear sump 37b.

Gear unit front housing 29a includes a longitudinally extending housing portion or wall 93 and a laterally extending generally planar housing portion or wall 94. Housing portion 94 provides a wall that separates sumps 37a and 37b and provides a common or shared wall for each sump 37a and 37b. An output drive shaft opening 95 extends longitudinally through housing portion or wall 94, and a bearing 96 in opening 95 supports output drive shaft 63. Gear unit rear housing 29b includes a longitudinally extending housing portion or wall 97 and a laterally extending generally planar housing portion or wall 98. The output drive shaft opening 63a extends longitudinally through housing portion or wall 98, and a bearing 100 in opening 63a supports output drive shaft 63.

When the motor vehicle 10 is not moving, the output shaft 63 and gears 79 and 78 and secondary pump motor unit drive shaft 45 are in a stationary condition and are not rotating. In this condition, the fluid level in the chambers or sumps 37a and 37b is approximately at a level indicated by dotted line 101 a in Figures 7 - 9, which is above secondary pump motor unit gear 78 and below planetary gear components 71. The fluid in planetary gear housing 29 within sumps 37a and 37b is a suitable gear lubricating oil. Because the interior chamber or sump 37 (including 37a and 37b) of planetary gear unit 24 is sealed from the interior chamber or sump 36 of hydraulic unit 23, the fluid in sump 37 of planetary gear housing 29 can be a different fluid than in sump 36 of hydraulic unit housing 26 and can be at a different fluid pressure level. Further, as discussed in greater detail below, while the fluid level within the hydraulic unit housing 26 is substantially at the top of hydraulic unit sump 36 at level 101 b (Figure 8) to permit sump 36 to provide a hydraulic fluid reservoir and to permit exchange and flow of hydraulic fluid from a motoring one of pump motor units 42,43 to a pumping one of the units, the fluid level within planetary gear unit sump 37 is at a different and lower level to avoid heat build-up that would occur if the fluid levels were the same and the planetary gear components 71 and gears in the planetary gear unit housing 37 were submerged in lubricating fluid.

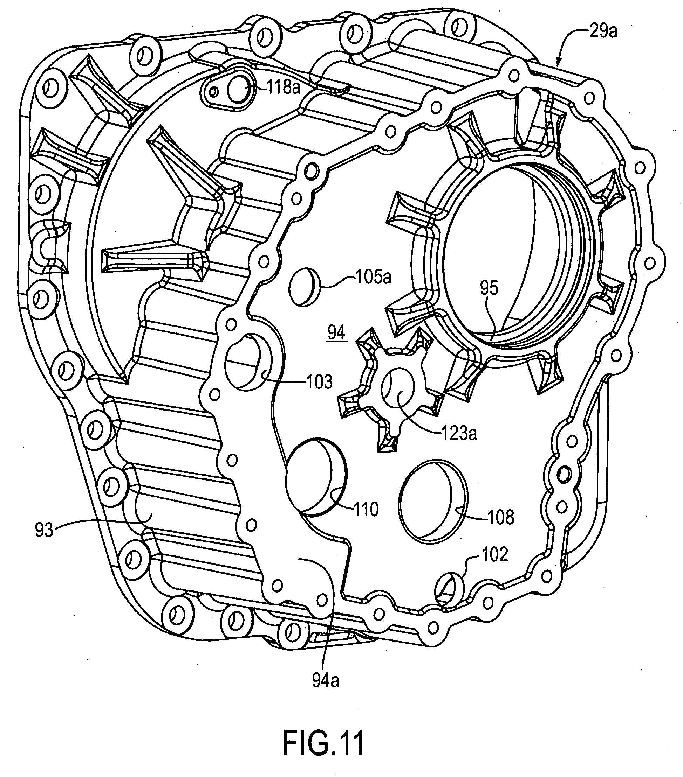

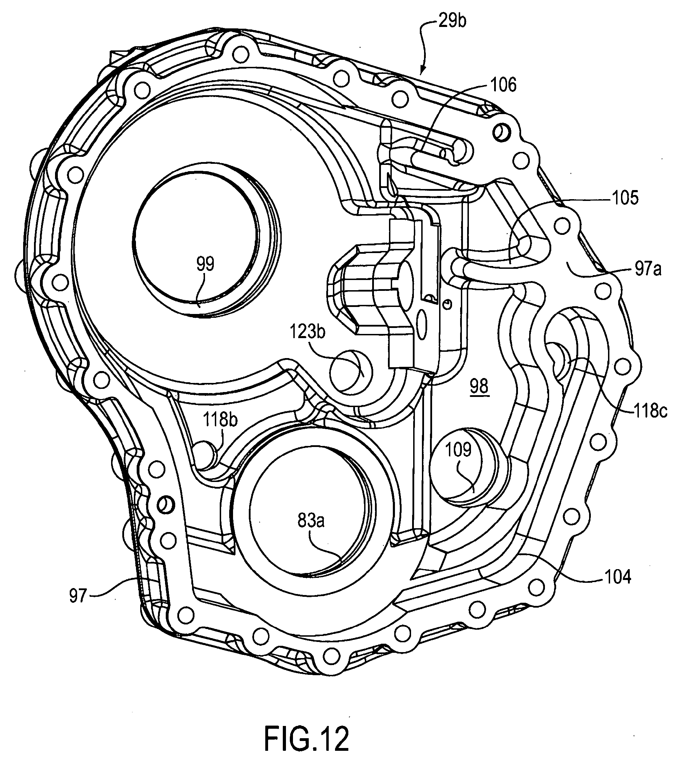

Referring now to Figures 11 and 12, a rear facing generally planar surface 94a of the front planetary gear housing 29a is illustrated in Figure 11 and a mating front facing generally planar surface 97a of rear planetary gear housing 29b is illustrated in Figure 12. For clarity, the housings 29a and 29b and their respective mating surfaces 94a and 97a are illustrated in Figures 11 and 12 without any other components. A restricted size return opening or fluid passage 102 extends longitudinally through wall 94 at a location vertically below level 101 a to connect sumps 37a and 37b, and a larger size pump opening or fluid passage 103 extends longitudinally through wall 94 at a location vertically above level 101 a to connect sumps 37a and 37b. The surface 98a includes a generally U-shaped longitudinally recessed pump channel 104. When housings 29a and 29b are assembled as shown in Figures 7-9, the rear facing surface 94a of housing 29a engages the front facing surface 97a of housing 29b. In this assembled configuration, surface 97a provides a wall to close pump channel 104, and closed pump channel 104 extends between and establishes fluid communication between openings 102 and 103. The front housing 29a also includes an opening 118a that may be used for mounting a speed sensor (not shown) for primary pump motor unit 42, and the rear housing 29b also includes an opening 118b that may be used for mounting a speed sensor (not shown) for secondary pump motor unit 43. An oil fill hole 118c is provided in the rear housing 29b to fill the sumps 37a and 37b with lubricating oil.

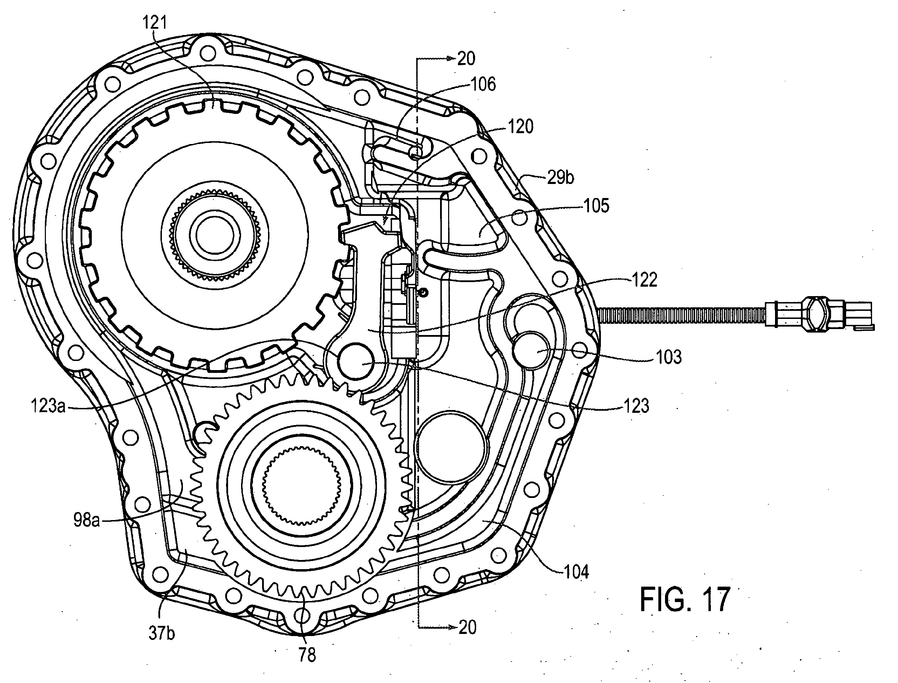

As illustrated in Figure 17, rotation of gear 78 near the bottom of chamber or sump 37b causes gear 78 to throw or pump fluid from return opening 102 (Figure 11) near the bottom of chamber or sump 37b upward through channel 104 (Figure 12) to pump passage 103. Passage 103 connects rear chamber or sump 37b to front chamber or sump 37a on the front side of housing 29b. This oil from channel 104 flowing through passage 103 will then fall onto the primary gear 76 in front sump 37a to increase oil splash lubrication in front sump 37a. Fluid flows faster from rear sump 37b to front sump 37a through passage 103 than it can return from front sump 37a to rear sump 37b through passage 102, and this results in the fluid level in sump 37b being substantially at the level of the bottom of gear 78 when the gear 78 is rotating. This prevents the gear 78 from rotating at high speeds or for long periods of time submerged in oil, and prevents heat build-up that would otherwise occur if the gear 78 were to run submerged in oil. When the vehicle 10 is moving, the output shaft 63 and gears 79 and 78 and secondary pump motor unit drive shaft 45 are rotating and this pumping from sump 37b to sump 37a through channel 104 occurs. When the vehicle 10 stops moving and the gear 78 stops rotating, fluid returns from front sump 37a to rear sump 37b through passage 102 and the fluid level in sumps 37a and 37b returns to level 101 a.

As illustrated in Figures 12 and 17, surface 98a of rear housing portion 29b also includes longitudinally extending ledges 105 and 106. When gear 78 rotates, gear 78 also splashes lubricating oil onto ledges 105 and 106. Oil on ledge 105 flows into front sump 37a through opening 105a (Figure 11) and onto rear primary bearing 81 (Figure 8). Oil on ledge 106 is directed to the park pawl assembly 120 described below through a vertical hole at the right end of ledge 105 as viewed in Figure 12. Accordingly, lubricating oil from rear sump 37b is pumped to front sump 37a to reduce the fluid level in rear sump 37b, and lubricating oil in the rear sump 37b is distributed to the moving components and bearings within the sumps 37a and 37b. This pumping and distribution is accomplished using the secondary gear 78 and the openings and channels and ledges described above, to eliminate the need for a conventional lubrication pump and to minimize the size and weight and complexity of the transmission 11.

As illustrated in Figures 9 and 11, the front housing 29a of the gear unit 24 also includes a secondary pump motor shaft opening 108, and the secondary pump motor shaft 45 extends through opening 108. As illustrated in Figures 8, 11 and 12, the housing 29a also includes a low pressure return line opening 109, and the housing 29b includes a low pressure return line opening 110. The opening 110 is used to optionally connect a low pressure accumulator to chamber 36 and is not used in the preferred construction illustrated in the drawings. A low pressure return tube 111 extends through and is sealed within openings 109 and 110, to connect low pressure hydraulic reservoir or sump 36 through sump 37a and 37b to opening 110.

Accordingly, the walls 93 and 94 of the front or first housing 29a define the front or first sump 37a. The rear or second housing 29b is connected to the first housing 29a and includes walls 97 and 98 that cooperate with the common wall 94 of the first housing 29a to define the rear or second sump 37b. A first set of rotatable gears 71 is disposed in the first sump 37a and has a stationary condition and a rotating condition. A second set of rotatable gears 78, 79 is disposed in the second sump 37b and has a stationary condition and a rotating condition. An input drive shaft 62 extends longitudinally into the first sump 37a and is rotatably connected to the first set of rotatable gears. An output drive shaft 63 extends longitudinally out of the second sump 37b and is rotatably connected to the second set of gears. The longitudinal axes 22 of the input and output drive shafts are substantially coaxial. A first hydraulic pump motor unit drive shaft 44 extends into the first sump 37a and is driving connected with the first set of rotatable gears. A second hydraulic pump motor unit drive shaft 45 extends longitudinally from end to end through the first sump 37a and into the second sump 37b and is drivingly connected with the second set of rotatable gears. The first and second hydraulic pump motor unit drive shafts are supported by bearings in walls 25, 94 and 98. Openings 102 and 103 extend between and establish a fluid flow path between the first sump 37a and the second sump 37b, and the openings 102 and 103 extend to the channel 104 to pump lubricating liquid from the second sump 37b to the first sump 37a when the second set of gears is rotating.

### METHOD OF ASSEMBLY AND DISASSEMBLY

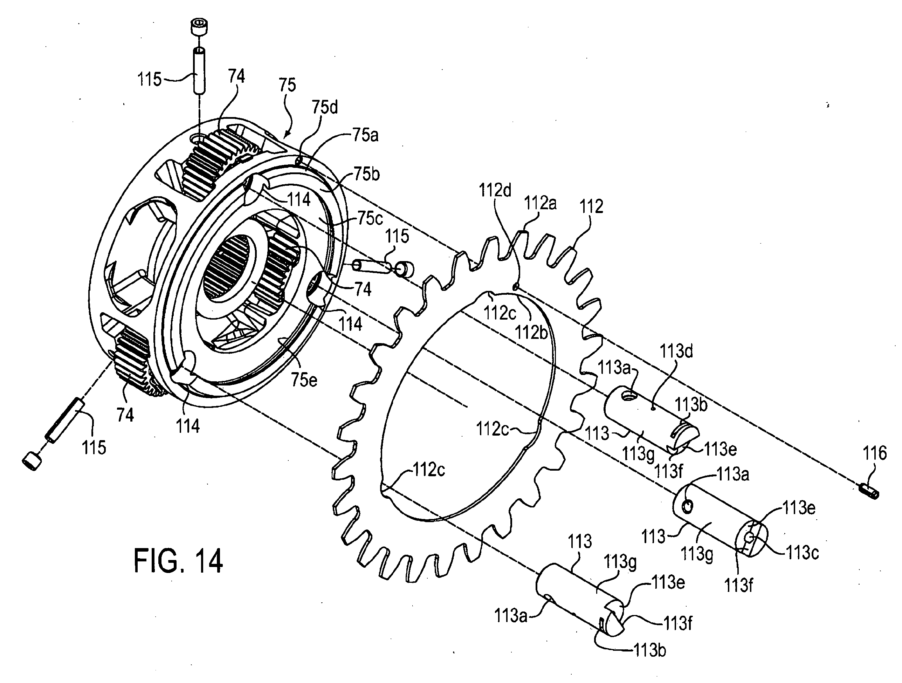

Turning now to Figures 14 and 22-33, various steps in a method 140 of assembling and disassembling and repairing a transmission according to the present invention and various subassemblies or assemblies according to the present invention are illustrated. The method 140 and the assemblies provide a hydromechanical powersplit transmission 11 illustrated in the other Figures and described elsewhere in this description. The method 140 may be practiced in the step by step order described below, in a different order, or in a reverse order, and the steps may be combined or broken into sub-steps, to assemble and disassemble (in which case the term assemble will be understand to mean disassemble) and repair according to the present invention.

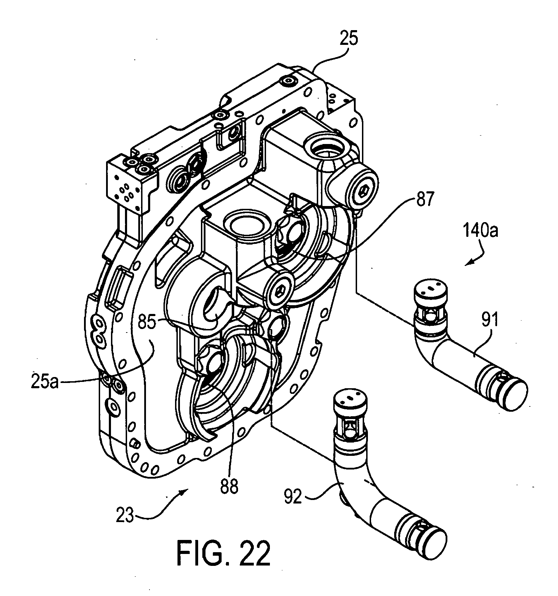

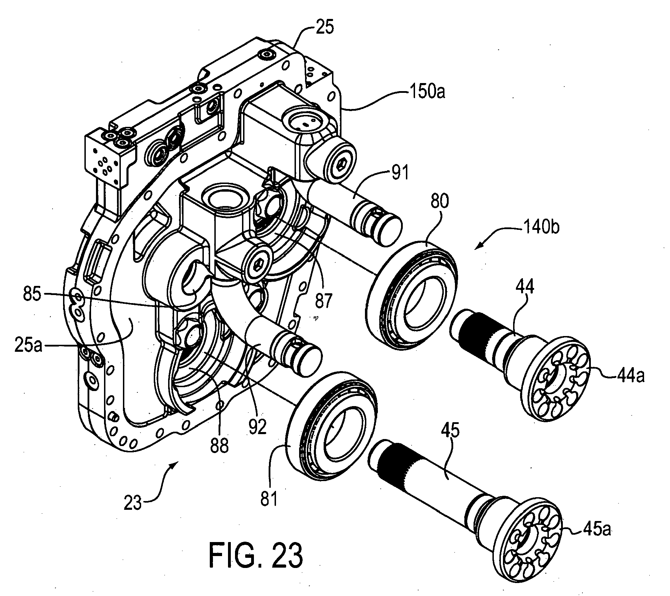

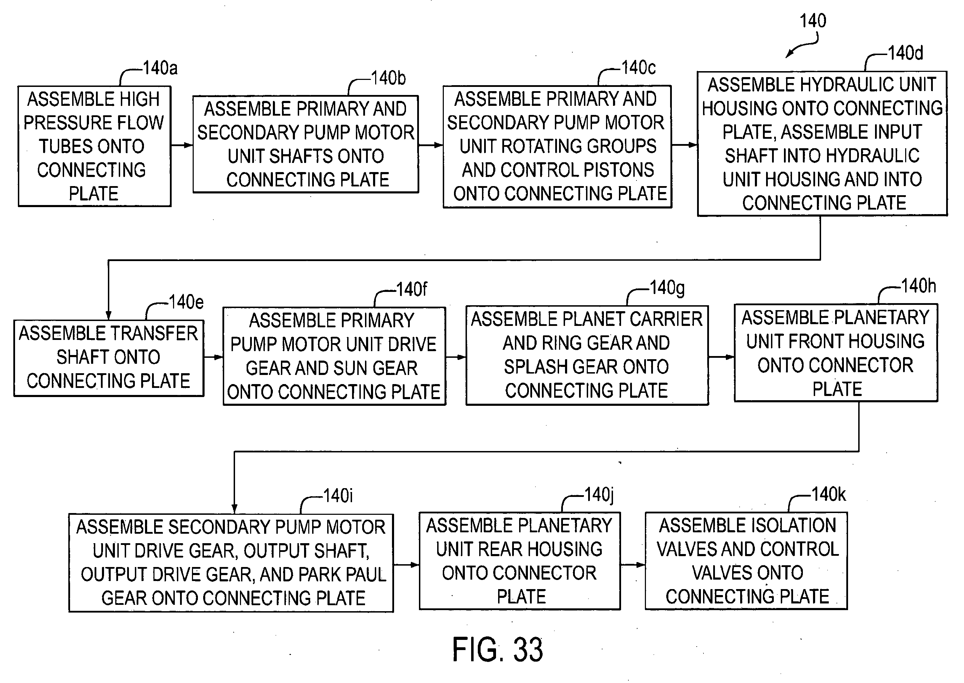

**.** The method of assembly 140 includes step 140a illustrated in Figures 22 and 33, which results in a connecting plate assembly 150a, illustrated in Figure 23. The method step 140a includes providing a combination connecting and fluid manifold plate 25 as described above, a high pressure flow tube 91 for the primary pump motor unit 42 described above, and an identical high pressure flow tube 92 for the secondary pump motor unit 43 described above. The flow tubes 91 and 92 are assembled laterally into laterally extending portions of the high pressure passages 89 in the connecting plate 25 (Figures 8 and 9). Once the flow tubes 91 and 92 are assembled in this manner at step 140a, the assembly 150a of the connecting plate 25 and the flow tubes 91 and 92 is provided as illustrated in Figure 23.

The method of assembly 140 further includes step 140b illustrated in Figures 23 and 33, which results in a connecting plate assembly 150b illustrated in Figure 24. The method step 140b includes providing the connecting plate 25 and connecting plate assembly 150a, the primary pump motor unit shaft 44, the secondary pump motor shaft 45, and the bearings 80 and 81. The primary bearing 80 and primary shaft 44 are assembled longitudinally into primary opening 87, and the secondary bearing 81 and secondary shaft 45 are assembled longitudinally into secondary opening 88. Once the components are assembled in this manner at step 140b, the assembly 150b of the connecting plate 25 and the primary shaft 44 (with piston sockets 44a) and secondary 45 (with piston sockets 45a) is provided as illustrated in Figure 24.

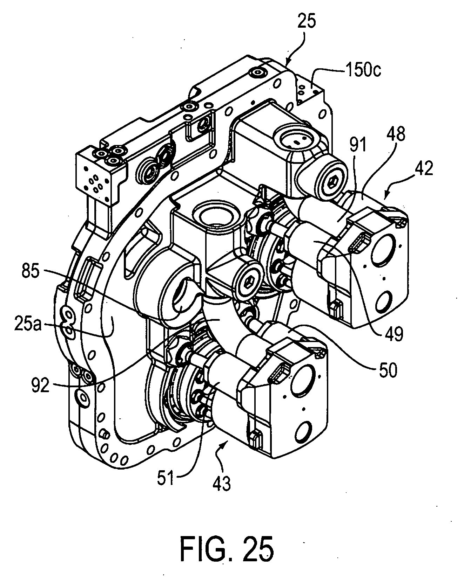

The method of assembly 140. further includes step 140c illustrated in Figures 24 and 33, which results in a connecting plate assembly 150c illustrated in Figure 25. The method step 140c includes providing the connecting plate 25 and connecting plate assembly 150b, the primary pump motor unit rotating group pistons 42a and barrel 42b, the secondary pump motor unit rotating group pistons 42a and barrel 42b, and the setting or control pistons 48-52. The primary pump motor unit rotating group pistons 42a and barrel 42b, the secondary pump motor unit rotating group pistons 42a and barrel 42b, and the setting or control pistons 48-52 are assembled longitudinally onto the connecting plate 25 and connecting plate assembly 150b. Once the components are assembled in this manner at step 140c, the assembly 150c of the connecting plate 25 and these components is provided as illustrated in Figure 25.

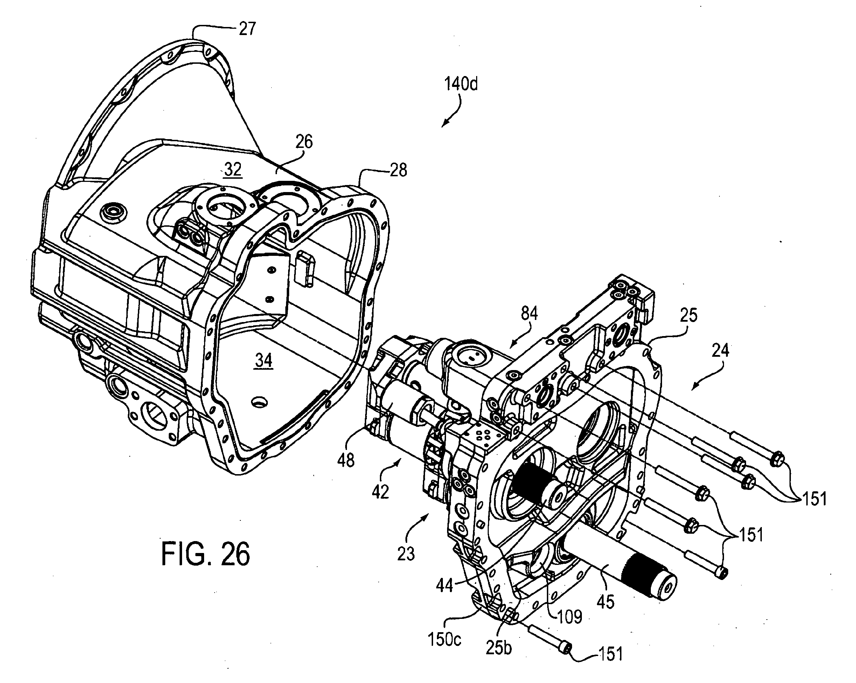

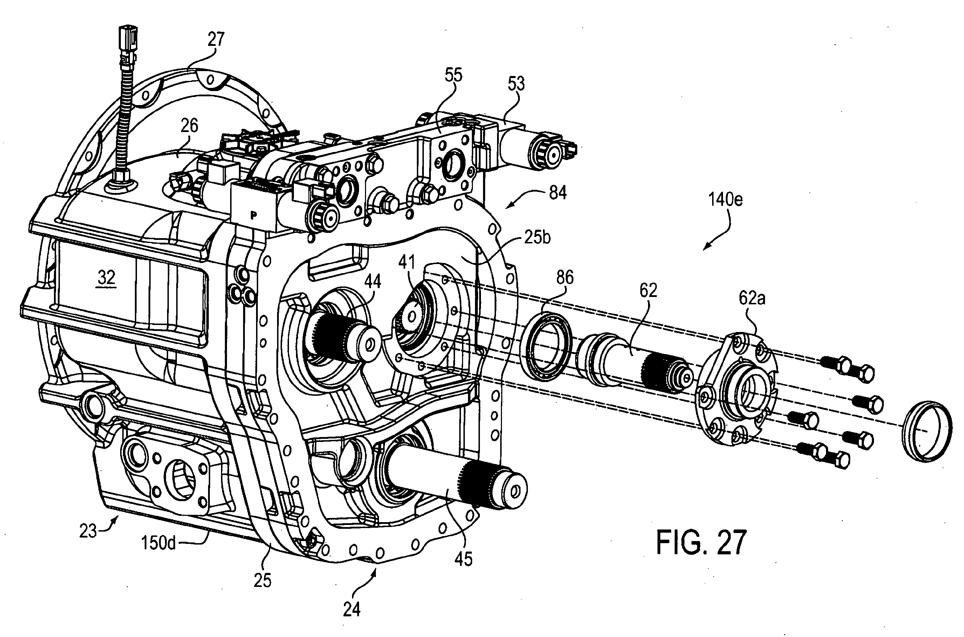

The method of assembly 140 further includes step 140d illustrated in Figures 26 and 33, which results in a connecting plate assembly 150d illustrated in Figure 27. The method step 140d includes providing the connecting plate 25 and connecting plate assembly 150c and the hydraulic housing 26. The housing 26 is assembled longitudinally onto the connecting plate 25 and connecting plate assembly 150c, encapsulating the hydraulic pump motor units 42, 43 and their rotating groups 42a, 42b, 43a, 43b and flow tubes 91, 92. The step 140d includes sealing housing 26 against the hydraulic side 25a of connecting plate 25 to provide the sealed chamber or sump 36. Assembly bolts 151 pass longitudinally through aligned holes in connecting plate 25 and housing 26, and nuts (not shown) are fastened to the ends of bolts 151 to secure housing 26 to connecting plate 25. The bolts 151 provide temporary fastening of the connecting plate 25 and housing 26 during assembly of the gear unit 24 during subsequent steps of the method 140. Once the components are assembled in this manner, the input shaft 41 is assembled longitudinally into the housing 26 and into the input shaft opening 85 in connecting plate 25 (see Figures 3 and 7) to complete step 140d and provide the assembly 150d of the connecting plate 25 and these components is provided as illustrated in Figure 27.

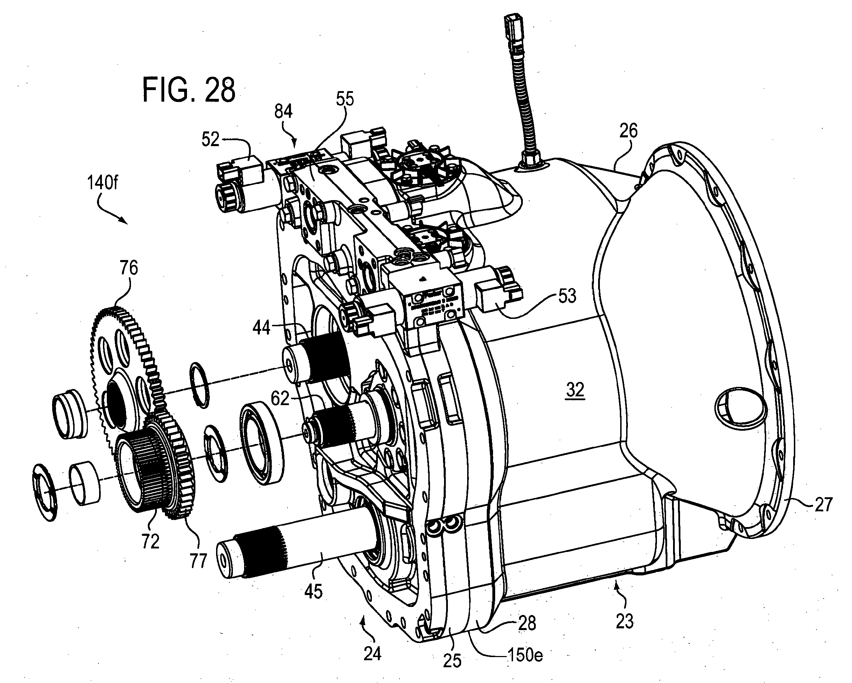

The method of assembly 140 further includes step 140e illustrated in Figures 27 and 33, which results in a connecting plate assembly 150e illustrated in Figure 28. The method step 140e includes providing the connecting plate 25 and connecting plate assembly 150d and the transfer shaft 62 and associated bearing 86 and associated transfer shaft retainer 62a. The transfer shaft 62 and bearing 86 and retainer 62a are assembled longitudinally onto the connecting plate 25 and connecting plate assembly 150d, and bolts 62b secure the retainer 62a in place. At this step, the valves 52 and 53 may also be secured to the connecting plate 25. Once the components are assembled in this manner at step 140e, the assembly 150e of the connecting plate 25 and these components is provided as illustrated in Figure 28.

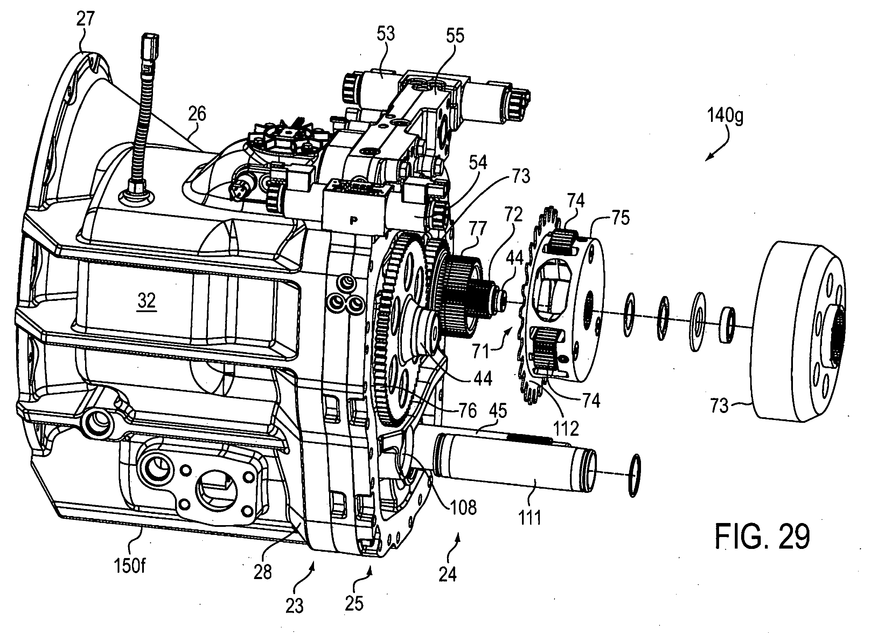

The method of assembly 140 further includes step 140f illustrated in Figures 28 and 33, which results in a connecting plate assembly 150f illustrated in Figure 29. The method step 140f includes providing the connecting plate 25 and connecting plate assembly 150e and primary pump motor unit drive gear 76 and one piece integral gear 77 and sun gear 72. The gear 76 is assembled longitudinally onto primary shaft 44, and the integral gear 77 and sun gear 72 is assembled longitudinally onto transfer shaft 62. Once the components are assembled in this manner at step 140f, the assembly 150f of the connecting plate 25 and these components is provided as illustrated in Figure 29.

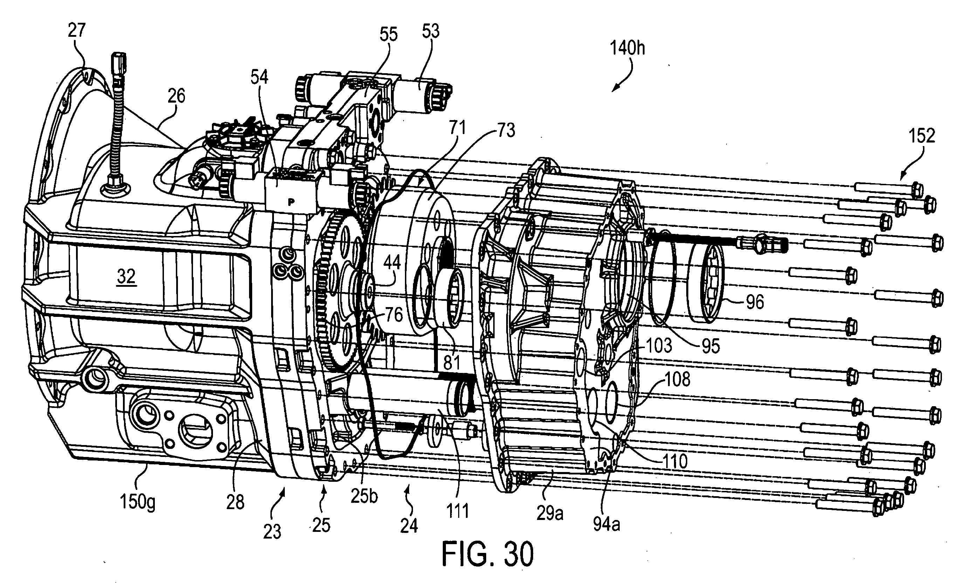

The method of assembly 140 further includes step 140g illustrated in Figures 29 and 33, which results in a connecting plate assembly 150g illustrated in Figure 30. The method step 140g includes providing the connecting plate 25 and connecting plate assembly 150f and planetary components 71, including planet gears 74, planet carrier 75 and ring gear 73, and associated splash gear 112. The planet gears 74 and planet carrier 75 and ring gear 73 are assembled longitudinally onto the sun gear 72 and connecting plate 25. At this step, the low pressure return tube 111 may also be assembled in the low pressure return opening 108 of connecting plate 25 Once the components are assembled in this manner at step 140g, the assembly 150g of the connecting plate 25 and these components is provided as illustrated in Figure 30.

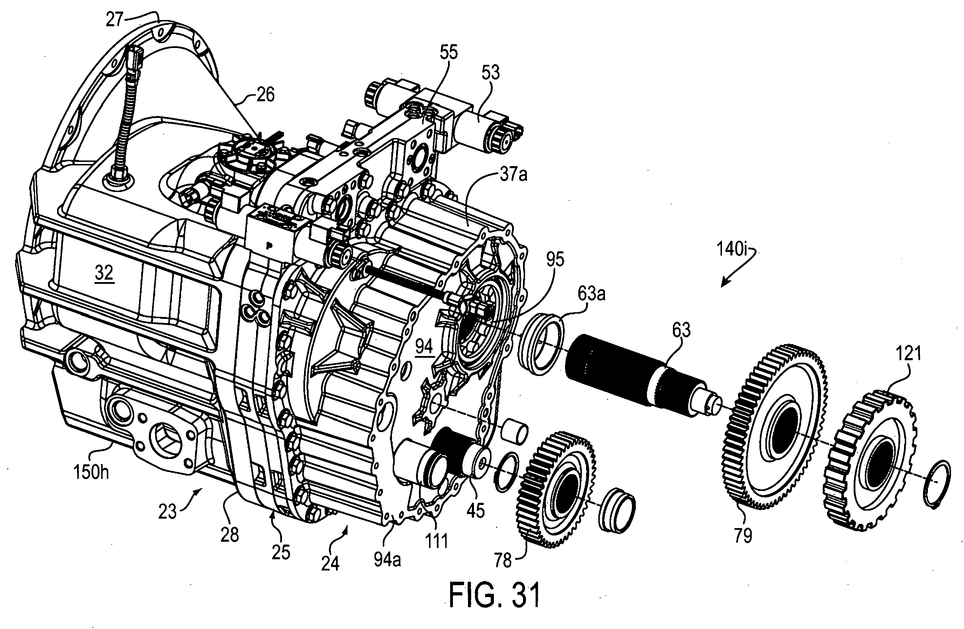

The method of assembly 140 further includes step 140h illustrated in Figures 30 and 33, which results in a connecting plate assembly 150h illustrated in Figure 31. The method step 140h includes providing the connecting plate 25 and connecting plate assembly 150g, front planetary gear housing 29a, and bearing 96. The front planetary gear housing 29a is assembled longitudinally onto the connecting plate 25, encapsulating the gear set 71, 72, 73. The step 140h includes assembling the pump motor unit shaft 44 into bearing 81. The step 140h also includes sealing housing 29a against the planetary gear side 25b of connecting plate 25 to provide the sealed chamber or sump 37a. The bearing 96 is assembled into opening 95 in housing 29a. Assembly bolts 152 pass longitudinally through aligned holes in front planetary gear housing 29a, connecting plate 25 and housing 26, and nuts (not shown) are threaded to the ends of bolts 152 to secure housings 29a and 26 to connecting plate 25. Once the bolts 152 are assembled and tightened, the bolts 151 are no longer needed. However, the bolts 151 are left in place and are prevented from falling out by the housing 29a covering the bolts 151. Once the components are assembled in this manner at step 140h, the assembly 150h of the connecting plate 25 and these components is provided as illustrated in Figure 31.

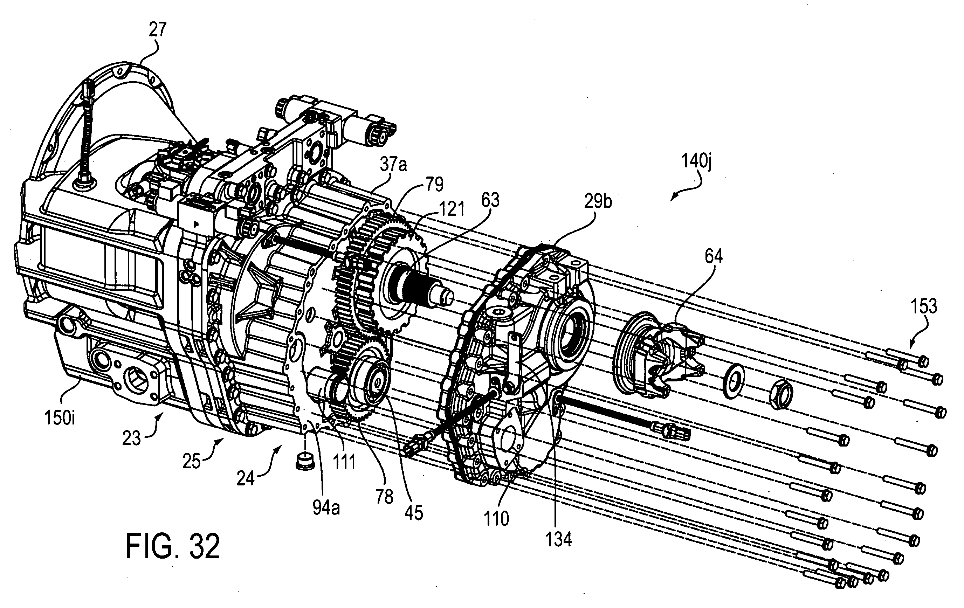

The method of assembly 140 further includes step 140i illustrated in Figures 31 and 33, which results in a connecting plate assembly 150i illustrated in Figure 31. The method step 140i includes providing the connecting plate 25 and connecting plate assembly 150h, output drive shaft 63, bearing 63a, gear 79, park pawl hub 121, and secondary pump motor unit drive gear 78. The output drive shaft 63 and bearing 63a are assembled longitudinally into drive shaft opening 95 in aligned relationship with transfer shaft 62, and gears 79 and 121 are longitudinally assembled onto output drive shaft 63. Secondary pump motor unit drive gear 78 is longitudinally assembled onto secondary pump motor unit drive shaft 45. Once the components are assembled in this manner at step 140i, the assembly 150i of the connecting plate 25 and these components is provided as illustrated in Figure 32.

The method of assembly 140 further includes step 140j illustrated in Figures 32 and 33, which results in the completed transmission 11 illustrated in Figures 1-3. The method step 140j includes providing the connecting plate 25 and connecting plate assembly 150i, rear planetary gear housing 29b, and coupling 64. The rear planetary gear housing 29b is assembled longitudinally onto the front planetary gear housing 29a and connecting plate 25, encapsulating gear set 78, 79, 121. The step 140j includes assembling the pump motor unit shaft 45 into bearing 83. The method step 140j also includes sealing the rear planetary gear housing 29b against the front planetary gear housing 29a to provide the sealed chamber or sump 37b (Figure 7) and to provide the channel 102 (Figures 12 and 17). Assembly bolts 153 pass longitudinally through aligned holes in rear planetary gear housing 29b and are threaded into aligned threaded holes in the front planetary gear housing 29a. The bolts 153 and this step secure the hydraulic unit housing 26 and the front gear unit housing 29a and the rear gear unit housing 29b and the connector plate 25 together. The temporary bolts used in step 140d remain in place during step 140h and hold the hydraulic unit housing 26 and connecting plate 25 together and in place to receive the bolts 153. The coupling 64 is then longitudinally assembled onto output drive shaft 63. Once the components are assembled in this manner at step 140j, the assembly of the transmission 11 is complete.

Using the method 140 of assembly according to the present invention, a hydraulic unit 23 and a planetary gear unit 24 are assembled using a central connecting plate 25. The hydraulic components are assembled on the hydraulic side 25a of the connecting plate 25, and a hydraulic unit housing 26 is assembled over the hydraulic components and in sealing engagement with the hydraulic side 25a to provide a sealed chamber 36 that is pressurized during operation of the transmission 11. The planetary gear components are assembled on the planetary gear side 25b of the connecting plate 25, and planetary gear housings 29a and 29b are assembled over the planetary gear components to provide sealed chambers 37a and 37b that are isolated from chamber 36. After assembly of the transmission 11, the transmission 11 is assembled onto the vehicle 10 in the position described above.

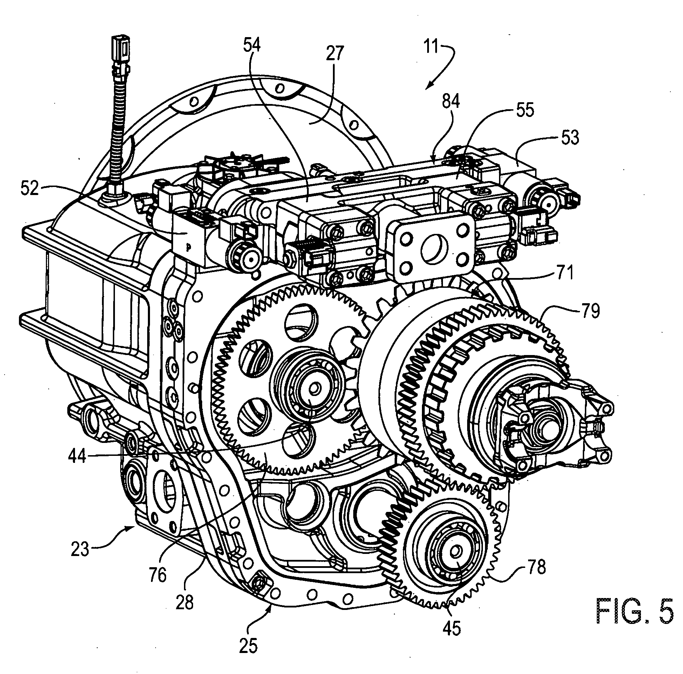

If it becomes necessary to repair the transmission 11, the transmission 11 is removed from the vehicle 10. For repairs to the planetary gear unit 24, the planetary gear unit housings 29b and, if necessary, 29a, are removed to access the planetary gear unit components as illustrated in Figure 5. Since all planetary gear unit components are assembled onto the connecting plate 25 from the planetary gear unit side 25b of the connecting plate 25, all planetary gear unit components may be removed and repaired or replaced without opening the hydraulic unit 23. For repairs to the hydraulic unit 23, the hydraulic unit housing 26 is removed to access the hydraulic unit components as illustrated in Figure 4.

### SPLASH GEAR AND LUBRICATION SYSTEM

Referring now to Figures 7 and 13-17, additional structure and features of the planetary gear set 71, planet carrier 75, planet gears 74 and lubrication system for the moving components within the front sump 37a are illustrated, with Figure 14 illustrating some of the structure in exploded format for clarity. The illustrated lubrication system is integral with the planet carrier 75 and planet gears 74, and eliminates the need for a piston pump or gerotor pump or similar pump having higher energy consuming pumping parts to provide lubricating liquid under pressure to the moving components of the planetary gear set 71 and other moving components within the front sump 37a. To achieve this, the invention provides a thin generally flat lateral splash gear 112 that is integral with the planetary gear set 71 and is carried by and rotates with planet carrier 75 about a longitudinal axis 71 a in the sump 37a. The splash gear 112 includes laterally outwardly extending teeth 112a, a central generally circular opening 112b, and three spaced apart notches 112c extending laterally outwardly from the opening 112b. The notches 112c each extend circumferentially through an angle of less than about 10 degrees and preferably less than about 5 degrees. The planet carrier 75 includes three planet gear shafts 113, and the three planet gears 74 are each rotatably disposed on a bearing 74a on one of the shafts 113. The planet gear shafts 113 are each received in a planet shaft bore 114 that extends longitudinally into the planet carrier 75 and are stationary relative to the planet carrier 75. Each of the planet gear shafts 113 includes a laterally extending cross bore 113a, and laterally extending pins 115 extend into the planet carrier 75 and through the planet shaft cross bores 113a to retain each planet gear shaft 113 and its associated planet gear 74 in place on the planet carrier 75. Each planet gear shaft 113 further includes a radially outwardly facing lock groove 113b on its generally cylindrical outer peripheral surface 113g to retain the splash gear 112 on the planet carrier 75 in the manner further described below.

To assemble the splash gear 112 onto the planet carrier 75, the splash gear 112 is assembled in the longitudinal direction onto the radially outer peripheral surface 75a of a circumferentially extending longitudinally projecting annular lip 75b on a lateral end face or lateral wall 75c of planet carrier 75. The notches 112c of the splash gear 112 are aligned with the shafts 113 so that the shafts 113 project longitudinally through the notches 112c, and this position of the splash gear 112 is a partially assembled position. The splash gear 112 is then rotated about 5 to 10 degrees (clockwise as viewed in Figure 14), so that the notches 112c rotate a few degrees away from the shafts 113. This causes the inner peripheral surface or central opening 112b of the splash gear 112 to move into the lock grooves 113b in the shafts 113. In this fully assembled position or configuration, the splash gear 112 is held onto the planet carrier 75 for rotation with the planet carrier 75, by the splash gear 112 engaging the lock grooves 113b of the planet gear shafts 113. A lock pin 116 is then pressed through a hole 112d in splash gear 112 and into a hole 75d in planet carrier 75, to hold the splash gear 112 against continued clockwise or counterclockwise rotation relative to the planet carrier 75.

The planet carrier 75 further includes a longitudinally extending central opening 75e. The central opening 75e includes an internal spline connector 75f. When the planet carrier 75 is assembled onto the transfer drive shaft 62 (Figures 1 and 7), an external spline connector on the transfer shaft 62 mates to the internal spline connector 75f of the planet carrier 75. With this structure, the planet carrier 75 and splash gear 112 are rotatably connected to the transfer shaft 62 and the input shaft 41, so that these components rotate together under all operating conditions.

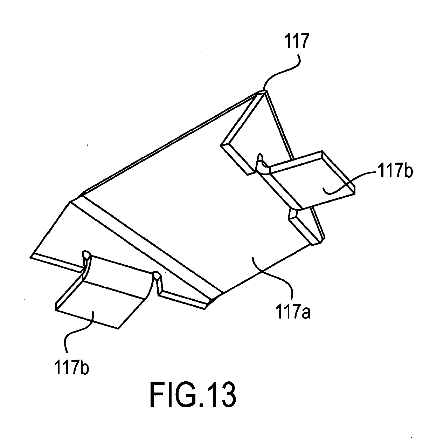

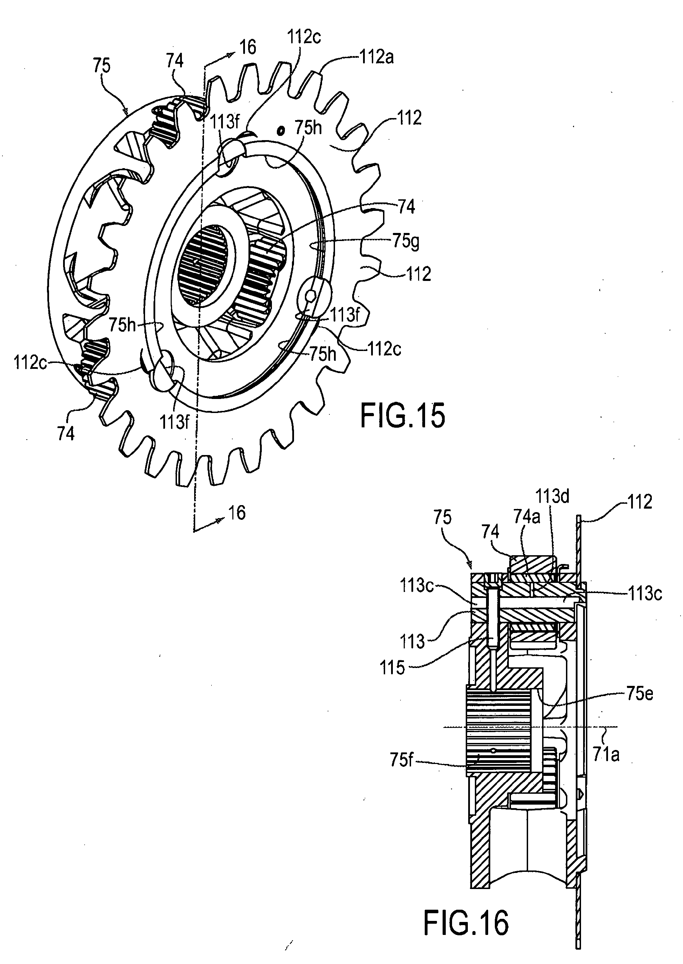

Each planet gear shaft 113 also includes a central bore or lubricating liquid flow passage 113c. Each flow passage 113c extends into the shaft 113 from the lateral wall 75c in the longitudinal direction to the left as viewed in the drawings. A lateral cross bore or radial passage 113d (Figure 16) extends radially from the central bore 113c to the outer peripheral surface 113g of each planet gear shaft 113 to provide lubricating liquid between each planet gear shaft 113 and an associated planet gear shaft bore 114 of the planet gear 74 and bearing 74a that is disposed on the shaft 113. The radial passage 113d extends radially outward from the central bore 113c in a direction away from the longitudinal axis 71 a. Each planet gear shaft 113 also includes a cut away bevel portion 113e at or near its end, adjacent the annular lip 75b of the planet carrier 75. The bevel portion 113e extends radially from the outer peripheral surface 113g of the shaft 113 and terminates at a longitudinally extending laterally inwardly facing wall 113f that is substantially adjacent to and communicates with the central flow passage 113c. As discussed more fully below, the wall 113f is radially outward from and substantially adjacent to the flow passages 113c and provides a planet gear shaft lubricating liquid catch wall that catches lubricating liquid and directs the lubricating liquid to the flow passage 113c. A further portion of the lubricating system in the chamber or sump 37a is provided by a sheet metal baffle or trough 117 (Figures 13 and 7). The baffle 117 includes a laterally extending wall 117a and tabs 117b, and the tabs 117b fasten the trough 117 to planetary gear side 25b of connecting plate 25.

When the planet carrier 74 and lateral wall 74c are in a rotating condition about longitudinal axis 71 a within the front sump 36a, the splash gear 112 rotates with the planet carrier 74 and lateral wall 74c about axis 71 a. The teeth 112a of the splash gear 112 rotate into and out of the lubricating oil in the lower portion of the front sump 37a below the fluid level 101 a. This splashes lubricating liquid within the front sump 37a and creates a lubricating liquid suspension or droplets within the upper portion of the sump 37a above the lubricating liquid level 101a. Some of this splashed lubricating liquid enters the space between the trough wall 117b and the connecting plate gear side 25b, and this oil flows by gravity to lubricate bearing 86. Some of the splashed lubricating liquid engages and accumulates on the rotating lateral wall 75c of the planet carrier 75 to at least partially coat the lateral wall 75c with lubricating oil. When this liquid is deposited in this manner on the lateral wall 75c, the liquid begins to rotate with the lateral wall 75c. The lubricating liquid immediately adjacent the wall 75c will rotate substantially at the same rotational velocity as the wall 75c, and the liquid farther away from the wall 75c will rotate at a slightly lesser rotational velocity than the wall 75c.

As this lubricating liquid on the lateral wall 75c rotates with the lateral wall 75c, the liquid is acted upon by centrifugal force and moved by centrifugal force laterally or radially outwardly against an annular radially inwardly facing catch wall 75g of the lip 75b. The catch wall 75g is substantially adjacent each flow passage 113c and is at least partially radially outward from each flow passage 113c. The lubricating liquid begins to accumulate at or flood the catch wall 75g, and the thickness or depth of the lubricating liquid increases at the location of the catch wall 75g. Due to the centrifugal force acting on the lubricating liquid, coupled with the relative rotational movement between the lateral wall 75c and the liquid and between the catch wall 75g and the liquid, the accumulating lubricating liquid flows circumferentially along the rotating catch wall 75g. This flow will be in a direction opposite the direction of rotation of the lateral wall 75c and catch wall 75g and toward and along the inwardly facing catch wall 113f of each associated planet gear shaft 113. A portion of this accumulating liquid then flows longitudinally through the passages 113c and then radially through the passages 113d to lubricate outer peripheral surfaces 113g of planet gear shafts 113 and bearings 74a and planet gears 74. To facilitate this flow of oil, inwardly facing catch wall 113f of each planet gear shaft 113 is generally laterally and circumferentially aligned with the inwardly facing catch wall 75g so that the surfaces 75g and 113f provide a generally smooth generally annular catch wall. The catch wall 75g extends longitudinally from the lateral wall 75c in the opposite direction to the flow passages 113c (that is, to the right as viewed in the drawings). As the planet carrier 75 rotates about axis 71a, centrifugal force acting on each planet gear 74 urges each planet gear 74 radially outward away from axis 71a. This unloads the bearings 74a at the location of the passages 113d, to facilitate flow of lubricating liquid from the passages 113d to the bearings 74a and to prevent the holes 113d from damaging the bearings 74a.

The annular catch wall 75g includes catch wall portions 75h adjacent each of the flow passages 113c, extending circumferentially in the direction of rotation of the lateral wall 75c and catch wall 75g. Lubricating liquid accumulating on each of these catch wall portions 75h will flow to an adjacent flow passage 113g, while lubricating liquid accumulating on the catch wall 75g on the other side of a flow passage 113g will flow to the next flow passage 113g or will flood over the catch wall 75g and contribute to the splash lubricating suspension or droplets. Each of the catch wall portions 75h has a sufficient circumferential extent to catch lubricating oil to feed its adjacent flow passage 113c. In the preferred construction this circumferential extent is at least about 10 degrees. Also, in the preferred construction the catch wall portions 75h are each generally semicircular and are joined to form the continuous annular catch wall 75g. As used herein, the term circumferential extending in relation to the catch wall portions 75h describes both curved surfaces and straight surfaces, so that, for example, the catch wall portions 75h could alternatively be straight wall portions. Also, while the catch wall portions 75h in the preferred construction are joined together to provide the continuous catch wall 75g, the catch wall portions 75h could alternatively be separated from one another. Further, the catch wall 75g and its catch wall portions 75h may extend perpendicular to the lateral wall 75c (in which case they extend only in the longitudinal direction) or at another angle relative to the lateral wall 75c (in which case they would extend in both the longitudinal and the lateral or radial direction). Also, the lateral wall 75c may be disposed in a plane that is perpendicular to the longitudinal axis 71 a (in which case it extends only in the lateral direction) or in a plane at another angle relative to the longitudinal axis 71 a (in which case it would extend in both the lateral and the longitudinal direction).

In this manner, lubricating oil from rear sump 37b is pumped through channel 104 to front sump 37a to reduce the fluid level in rear sump 37b, and lubricating oil in the front sump or chamber 37a is distributed to the moving components and bearings within the chamber 37a. This distribution is accomplished using the splash gear 112 and the planet carrier 75 and lateral wall 74c and catch walls 75g, 75h and 113f and flow passages 113c and 113d and planet gear shafts 113, to eliminate a need for a conventional lubrication pump and to minimize the size and weight and complexity of the transmission 11. The lubricating system could alternatively secure a rotating splash gear and rotating lateral wall with catch walls to a different rotating planetary gear set component, such as for example a rotating ring gear, or could alternatively be used with other types of gear sets or in other applications.

### PARK PAWL ASSEMBLY

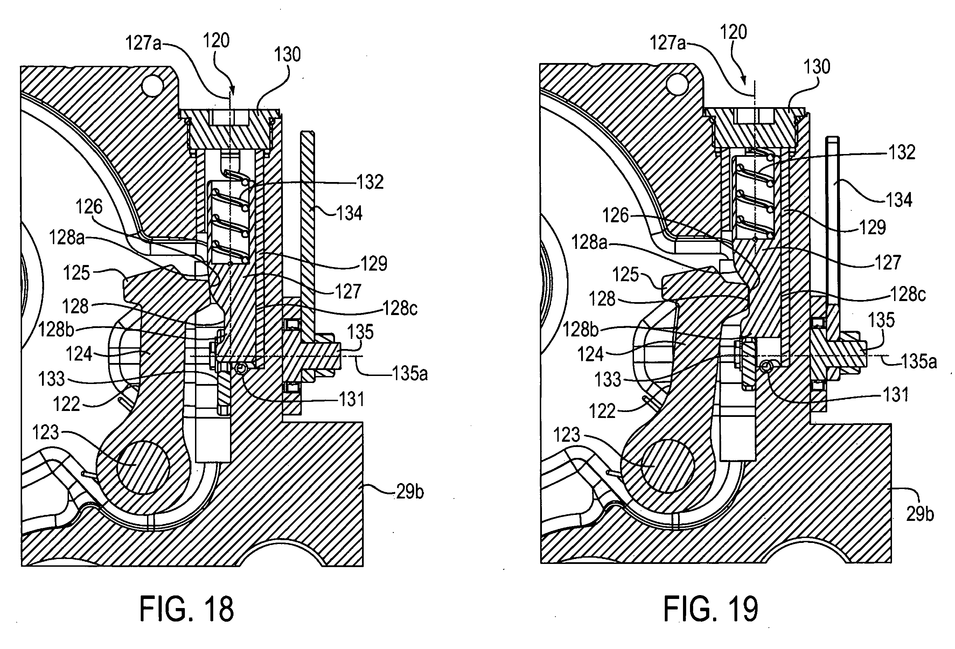

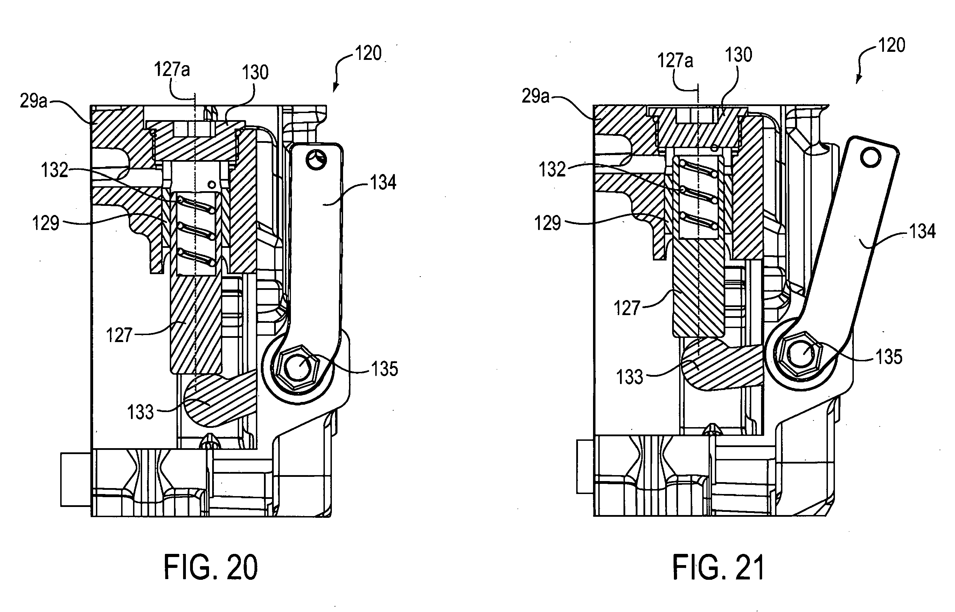

Referring now to Figures 1 and 17-21, the transmission 11 further includes a park pawl assembly 120. The park pawl assembly 120 locks the output drive shaft 63 (and the gears 79 and 78 and the ring gear 73) against rotation to prevent unwanted movement of the vehicle 10 such as when the vehicle 10 is parked. This is accomplished by the park pawl assembly 120 locking the drive shaft 63 to the stationary rear planetary housing 29. As described more fully below, the park pawl assembly 120 is moveable between an engaged or locked position illustrated in Figures 17, 18 and 20, and a disengaged or unlocked position illustrated in Figures 19 and 21. The park pawl assembly 120 permits use of a relatively small assembly arranged in the sump 37, to accommodate relatively large forces required to lock the transmission and drive wheels of relatively large weight vehicles and to transmit those relatively large forces to the housing 29 without over stressing the park pawl assembly 120 or the housing 29.

The park pawl assembly 120 includes a park hub 121 (Figures 1 and 17) disposed in the rear interior chamber or sump 37b between the front planetary gear housing 29a and the lateral surface 98a of the rear planetary gear housing 29b. The hub 121 is secured to the output drive shaft 63 by a spline connection. A pawl 122 is disposed on a pawl shaft 123 for rotational movement about the longitudinal axis or pivot axis of the shaft 123 between the locked position illustrated in Figures 17, 18 and 20 and the unlocked position illustrated in Figures 19 and 21. The hub 121 and pawl 122 are each preferably of a suitable steel material that is case hardened, for example by carburizing, to a suitable hardness, for example about Rockwell C60. The pawl shaft 123 and its pivot axis, referred to as the park pawl pivot axis, extend longitudinally parallel to the output drive shaft 63. The pawl shaft 123 is secured to housings 29a and 29b by the opposite ends of the shaft 123 being received in a bore 123a in housing 29a and in a bore 123b in housing 29b (Figures 11 and 12). The pawl 122 is generally flat or planar in the lateral direction and includes a pawl arm 124, a pawl locking finger 125 and a pawl actuating finger or pawl locking surface 126 laterally opposite the pawl locking finger 125. The pawl 122, including the locking finger 124 and the locking surface 126, are moved along a park pawl path between locked and unlocked positions by a park pawl actuator 127. The park pawl path is a rotational path about the park pawl pivot axis. The park pawl actuator 127 is a generally cylindrical plunger. A cam face or cam surface 128 is provided on the outer peripheral cylindrical surface of one side of the actuator 127 to engage the park pawl locking surface 126, and the remainder of the actuator 127 retains its cylindrical shape. The park pawl actuator 127 slides in a substantially straight line park pawl actuator path along the longitudinal axis 127a of the actuator 127 within a generally cylindrical bushing 129, which is fit into a bore in housing 29b and retained within the bore by a threaded cap or plug 130. The bore is preferably generally cylindrical. The substantially straight line path of the park pawl actuator 127 is substantially perpendicular to the pivot axis of the park pawl 122 and is perpendicular to the direction of movement of the park pawl locking finger 125 and locking surface 126 as the locking finger 125 and locking surface 126 move between their locked and unlocked positions.

As shown in Figures 18 and 19, the cylindrical bushing 129 has an axial extent that is longer than the axial extent of the park pawl actuator 127. This permits the park pawl actuator 127 to slide within the bushing 129 during the entire travel of the park pawl actuator 127 between its locked position (Figure 18) and its unlocked position (Figure 19). Also, the portion of the cylindrical bushing 129 circumferentially aligned with the cam surface 128 of the park pawl actuator 127 is cut away, to allow the pawl actuating finger 126 to extend through the cut away portion of the bushing 129 and engage the cam surface 128. The cut away portion of the bushing 129 is in the shape of a slot that extends longitudinally slightly more than half the length of the bushing 129 from the bottom of the bushing 129 and that extends circumferentially an amount sufficient to accommodate the width of the actuator finger 126 that extends through the cut away portion to engage the cam surface 128. A cross pin 131 at the bottom of the bore orients the bushing 129 and retains it against rotational movement in the bore. The pin 131 also provides a stop for the park pawl actuator 127 when the cam is pushing the pawl 122 downwardly into its locked position. The cylindrical shape of the park pawl actuator 127 and bushing 129 aids machining of the cam surface 128. Further, the cylindrical shape of the park pawl actuator 127 and bushing 129 and bore radially opposite the cam face 128 provides curved surfaces that spread lateral loads transmitted by the pawl 122 laterally against the cam face 128 of the park pawl actuator 127 and against the housing 29b over a relatively large area of the housing 29b and bushing 129 to reduce stress.

The park pawl 127 is free floating with the bushing 129 and bore in which the bushing 129 is disposed. A locking spring 132 pushes or biases the free floating park pawl actuator 127 toward the locked position illustrated in Figures 17, 18 and 20. The cam face 128 of park pawl actuator 127 in the locked position engages or acts against the park pawl locking surface 126 to lock the pawl locking finger 125 of the pawl 122 against the hub 121 between adjacent teeth and against one tooth of the hub 121. This locks the hub 121 and output drive shaft 64 against the housing 29b and prevents rotation of the output drive shaft 64 and drive wheels 15. The cam face or cam surface 128 of the actuator 127 includes a radially outer portion 128a that is radially outward from the longitudinal axis 127a. The radially outer portion 128a extends in the longitudinal direction and provides a positive lock to engage the locking surface 126 when the actuator 127 and pawl 122 are in their locked position, to prevent release of the pawl locking finger 125 even with large loads imposed on the locking finger 125 such as may occur if the vehicle 10 is parked on a hill. The portion 128a may be slightly flat relative to the generally cylindrical outer peripheral surface of the actuator 127 or may be coextensive with the generally cylindrical outer peripheral surface. The cam face 128 also includes a generally flat radially inner portion 128b that is radially inward toward the longitudinal axis 127a relative to the surface 128a. The surface 128b extends in the longitudinal direction and engages the pawl locking surface 126 when the pawl 122 and actuator 127 are in their unlocked positions. The cam face 128 further includes an inclined portion or ramp that extends longitudinally and radially relative to the axis 127a between the outer portion 128a and the inner portion 128b. The locking surface 126 engages the inclined surface as the actuator 127 and the park pawl 122 move between their locked and unlocked positions. The outer peripheral surface of the generally cylindrical park pawl actuator 127 circumferentially spaced from the cam surface 128 provides an actuator curved surface 128c. The cam surface 128 is laterally intermediate the pawl locking finger 125 and the actuator curved surface 128c, whereby forces transmitted by the locking finger 125 through the locking surface 126 against the cam surface 128 are transmitted to the actuator curved surface 128c and against the curved surface of the bushing 129 and against the curved surface of the bore in the housing 29b in which the bushing 129 and actuator 127 are disposed.

A release arm 133 and a release lever 134 are secured to a release shaft 135, and the components 133, 134 and 135 rotate or pivot together as a unit about the longitudinal axis or release arm pivot axis 135a of the release shaft 135. The release arm pivot axis and the park pawl pivot axis and the path of the park pawl actuator 127 are substantially perpendicular to one another. To move the park pawl assembly 120 from its locked position to its unlocked position against the bias of locking spring 132 to release the park pawl 122 from its locked position, the release lever 134 is rotated about the release pivot axis 135a from its locked position illustrated in Figures 18 and 20 to its unlocked position illustrated in Figures 19 and 21. This rotation of the release lever 134 rotates the shaft 135 and the release arm 133 about the pivot axis 135a, so that the release arm 133 positively lifts the park pawl actuator 127 upward along its substantially straight line movement path 127a in the bushing 129 against the bias of the spring 132, to allow release of the pawl locking finger 125 from the hub 121. A second spring (not shown) biases the pawl 122 and locking finger 125 away from the hub 121 and against the cam face 128, to release the locking finger 125 from hub 121 and prevent unintentional engagement. The inclined ramp intermediate the portions 128a and 128b smoothly guides the pawl locking surface 126 about the pawl pivot axis 135a of the pawl shaft 135 as the park pawl 122 moves to its unlocked position. The release lever 134 is preferably secured to a cable (not shown) that is operated by the driver of the vehicle 10 or by an actuator (not shown) to rotate the release lever 134. When the release lever 134 is rotated to rotate the release arm 133 in the opposite direction from the unlocked position to the locked position, the spring 132 biases the park pawl actuator 127 downward as viewed in the drawings. As the actuator 127 moves downward, the inclined portion of the cam face 128 engages the pawl locking surface 126 and rotates a locking finger 125 of the pawl 122 against the hub 121. If the locking finger 125 engages a tooth of hub 121 rather than entering a space between adjacent teeth, the action of spring 132 retains the locking finger 125 biased against the tooth until the hub 121 rotates a slight amount such as by slight movement of the vehicle 10. When this slight movement occurs, the locking finger 125 will then move into the space between adjacent teeth to lock the hub 121 against movement. When the locking finger 125 is seated in the space between adjacent teeth of the hub 121, the radially outer portion 128a of the cam face 128 engages the locking surface 126 and positively locks the park pawl 122 in its locked position.

The hub 121 includes several teeth on its outer peripheral surface, and the profile of each tooth is involute. The profile of the oppositely facing surfaces of the pawl locking finger 125 that engage the teeth is substantially flat. When the park pawl assembly 120 is in its locked position with the finger 125 engaging a tooth of the hub 121 and the vehicle is parked on a hill, the involute profile of the tooth acting against the substantially flat profile of the finger 125 urges the finger 125 out of engagement with the tooth to assure unlocking. When the park pawl assembly 120 is in its unlocked position and the park pawl actuator 127 is moved to allow spring 132 to urge the finger 125 toward its locked position, the involute profile of the teeth and the substantially flat profile of the finger 125 prevent the finger 125 from fully entering the space between the teeth and locking against a tooth of the hub 121 until the vehicle has slowed to an acceptable slow speed, for example one mile per hour or less, or has stopped.

The park pawl assembly 120 therefore includes the park pawl 122, the park pawl actuator 127, and the release arm 133. The park pawl actuator 127 is a generally cylindrical plunger and moves with its cam surface 128 along a substantially straight line path from an unlocked position to a locked position by operation of the locking spring 132 in response to rotational movement of the release arm 133 to its locked position. This substantially straight line movement of the actuator 127 is substantially perpendicular to the direction of movement of the locking surface 126 and locking finger 125 of the park pawl 122 and causes movement of the park pawl 122 to its locked position. The release arm 133 rotates about its pivot axis back to its unlocked position, and this rotational movement of the release arm 133 causes substantially straight line movement of the park pawl actuator 127 against the bias of the locking spring 132 back to its unlocked position, to return the park pawl 122 to its unlocked position.

### SPLINE CONNECTIONS

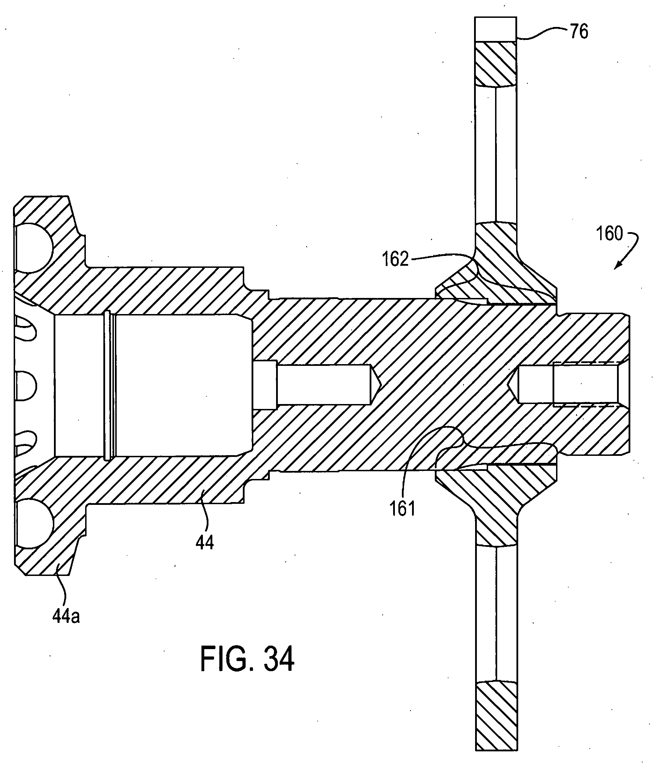

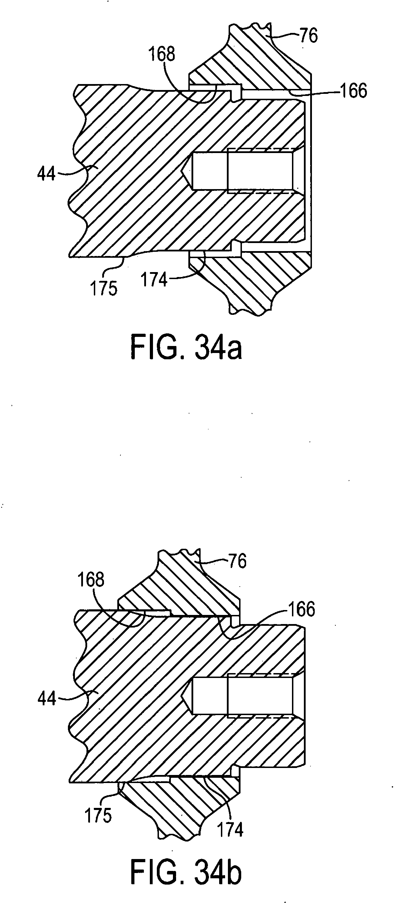

The gears and shafts described above are preferably secured together using a spline connection 160 illustrated in Figures 34-38. The spline connection 160 is illustrated in Figures 34-38 as applied to the connection between the primary pump motor unit drive shaft 44 and the primary pump motor unit drive gear 76. However, the same spline connection 160 is also used between the secondary pump motor unit drive shaft 45 and its associated drive gear 78 and between other shaft and gear connections illustrated in the drawings. Further, the spline connection 160 may be used in other applications to drivingly connect two components such as a shaft and a member arranged on the shaft.

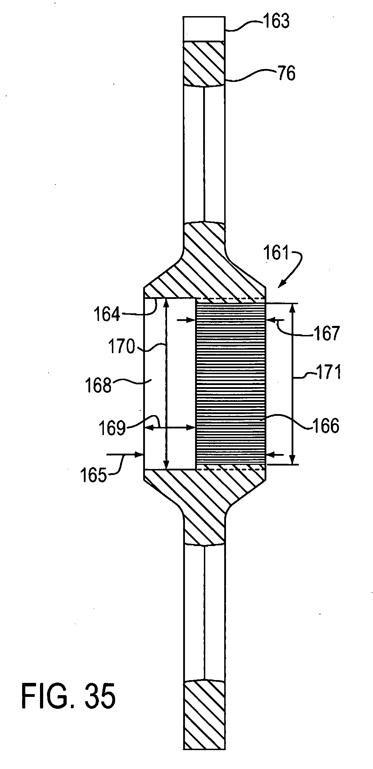

The spline connection 160 includes an internal spline connector 161 on the gear 76 and a mating external spline connector 162 on the shaft 44. As best shown in Figure 35, the primary gear 76 includes external gear teeth 163 and a longitudinally extending bore 164. The bore 164 provides an internal spline connector, and the internal spline connector 164 extends longitudinally from end to end through the gear 76 for a longitudinal extent 165. The internal spline connector 164 includes a spline portion 166 having a longitudinal extent 167. The longitudinal extent 167 of the spline portion 166 is at least about 30% of the longitudinal extent 165 of the internal spline connector 164 and is preferably between about 50% and about 80 percent of the longitudinal extent 165 of the internal spline connector 164. In the preferred construction illustrated in Figure 35, the longitudinal extent 167 of the spline portion 166 is about 60% of the longitudinal extent 165 of the internal spline connector 167. The internal spline connector 164 also includes a pilot and centering portion 168 having a substantially cylindrical generally smooth surface substantially adjacent the spline portion 166. The pilot and centering portion 168 has a longitudinal extent 169. The longitudinal extent 169 of the pilot and centering portion 168 is at least about 10% of the longitudinal extent 165 of the internal spline connector 164 and is preferably between about 20% and about 60% of the longitudinal extent 165 of the internal spline connector 164. In the In the preferred construction illustrated in Figure 35, the longitudinal extent 169 of the pilot and centering portion 168 is about 40% of the longitudinal extent of the 165 of the internal spline connector 164. The pilot and centering portion 168 has an internal diameter 170 that is substantially greater than the internal diameter 171 of the crests of the teeth of the splines of the spline portion 166. The solid lines indicated in Figure 35 for the spline portion 166 illustrate the crests of the splines, and the dotted lines indicated in Figure 35 for the spline portion 166 illustrate the roots of the splines.

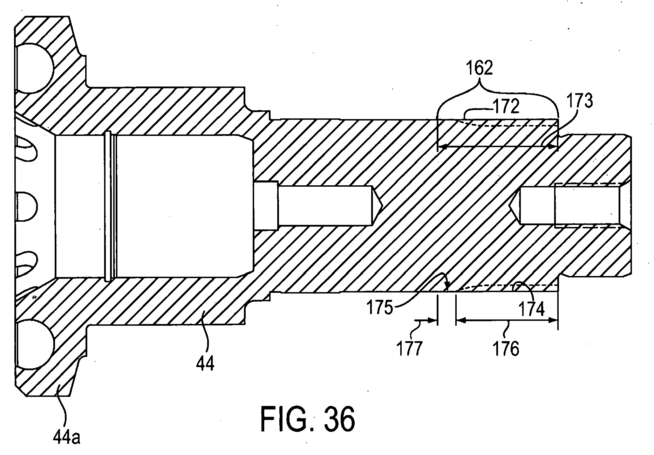

As best shown in Figures 34, 35 and 36, the external spline connector 162 of the shaft 44 is an external surface 172 of the shaft 44 that is at least partially radially aligned with the internal spline connector portion 161 of the gear 76 when the gear 76 is partially or fully assembled on the shaft 44. The external spline connector 162 has a longitudinal extent 173, and the external spline connector 162 includes a spline portion 174 and a substantially smooth generally cylindrical centering portion 175 longitudinally substantially adjacent the spline portion 174. The spline portion 174 has a longitudinal extent 176 that is greater than about 40% of the longitudinal extent 173 and is preferably between about 60% and about 100% of the longitudinal extent 173. In the preferred construction the longitudinal extent 176 is about 80% of the longitudinal extent 173. The centering portion 175 has a longitudinal extent 177 that is less than about 50% of the longitudinal extent 173 and is preferably between about 30% and 0% of the longitudinal extent 173. In the preferred construction the longitudinal extent 177 is about 20% of the longitudinal extent 173. The solid lines indicated in Figure 36 for the spline portion 174 indicate the crests of the splines, and the dotted lines indicated in Figure 36 for the spline portion 174 indicate the roots of the splines. Only the roots of the splines of the spline portion 174 are illustrated in Figures 34, 34a and 34b, to avoid overlapping lines on those Figures among the spline portion 174 and the mating spline portion 166. As illustrated in Figures 34a and 34b and further described below, the generally smooth portion 168 is longitudinally substantially adjacent its spline portion 168 on one side of the spline portion 168, while the generally smooth portion 175 is substantially adjacent its spline portion 174 on the opposite side of the spline portion 174.

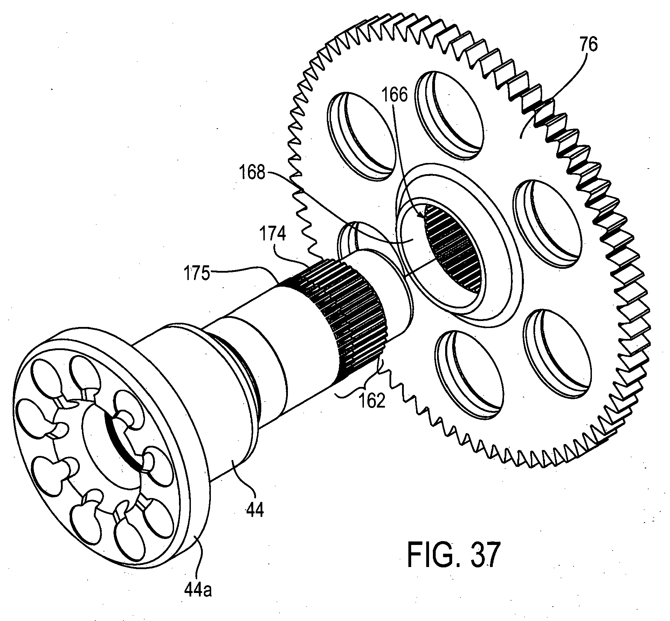

Figure 37 illustrates the gear 76 and shaft 44, and the internal and external spline connectors 161 and 162, in a disassembled configuration. To assemble the gear 76 onto the shaft 44, the smooth pilot and centering portion 168 of the internal spline connector 161 is moved longitudinally onto and over the spline portion 174 of the external spline connector 162 of the shaft 44, to a first partially assembled position or configuration illustrated in Figure 34a. During this movement, the centering portion 168 of the internal spline connector 161 lightly engages and centers and guides the shaft 44 and its external spline connector 162 to longitudinally and circumferentially align the spline portions 166 and 174. The pilot and centering portion 168 aligns the longitudinal axis of the gear 76 relative to the longitudinal axis of the shaft 44 so that these axes are substantially coaxial. The gear 76 can be rotated relative to the shaft 44 while the smooth pilot and centering portion 168 is in radial alignment with the spline portion 174 as illustrated in Figure 34a, to circumferentially align splines of the internal spline portion 166 with the splines of the external spline portion 174. The smooth pilot and centering portion 168 has a diameter only slightly larger than the diameter of the crests of the spline portion 174, for example with a minimal clearance fit between the portions 168 and 174, to assist in aligning the portions 168 and 174 without binding during assembly.

Continued movement of the gear 76 onto the shaft 44 to a second partially assembled position or configuration illustrated in Figure 34b causes the spline portion 166 of the internal spline connector 161 of the gear 76 to move longitudinally into meshing engagement with the spline portion 174 of the external spline connector 162 of the shaft 44. In this position, the spline portions 166 and 174 are radially aligned. Again, the smooth pilot and centering portion 168 slides along the outside or crests of the spline portion 174 to continue to help maintain alignment during movement to this position. Continued movement of the gear 76 onto the shaft 44 to the fully assembled position illustrated in Figure 34 causes the smooth pilot and centering portion 164 of the internal spline connector 161 of the gear 76 to move into radial alignment with the smooth centering portion 175 of the external spline connector 162 of the shaft 44, with the smooth portions 164 and 175 engaging with a suitable close fit, such as for example a transition fit or an interference fit, to continue to maintain alignment and to reduce relative movement between the spline connectors 161 and 162. Suitable stops (not shown) may be provided to lock the gear 76 against longitudinal movement relative to the shaft 44 after assembly to the position illustrated in Figure 34, although such stops may not be required in the assembly illustrated in the drawings.

In this manner, the spline connection 161 includes an internal spline connector 161 and an external spline connector 162. At least one of the spline connectors 161 or 162, and preferably both, include a spline portion and a smooth centering portion. During assembly, the smooth centering portion of one of the spline connectors 161 or 162 cooperates with the spline portion of the other spline connector to align the connectors 161 and 162 while permitting rotating movement between the spline connectors 161 and 162. In the fully assembled configuration, the smooth centering portion of the one spline connector moves into registry with the smooth centering portion of the other spline connector to continue to maintain alignment and reduce relative movement between the spline connectors.

### CONCLUSION

The principles, embodiments and operation of the present invention are described in detail herein with reference to the accompanying drawings but are not to be construed as being limited to the particular illustrative forms disclosed. It will thus become apparent to those skilled in the art that various modifications of the principles, embodiments and operation herein can be made.

## Claims

1. A connecting assembly (84) for a hydromechanical transmission (11), comprising,
a connecting plate (25) having a hydraulic unit wall (25a) and a gear set unit wall (25b),
a hydraulic unit housing (26) which is connected to the hydraulic unit wall to provide a sealed hydraulic chamber (36) which contains a hydraulic fluid,
a gear set unit housing (29) which is connected to the gear set unit wall to provide a sealed gear set chamber (37),
first and second hydraulic pump motor units (42, 43) disposed in the sealed hydraulic chamber and arranged so that hydraulic fluid can flow between each of the pump motor units and the sealed hydraulic chamber so as to permit exchange of fluid between the pump motor units, and
a gear set (71) disposed in the sealed gear set chamber,
**characterised in that** the fluid level within the hydraulic unit housing (26) being substantially at the top of hydraulic unit chamber to permit the hydraulic unit chamber (36) to provide a hydraulic fluid reservoir and to permit exchange and flow of hydraulic fluid from a motoring one of pump motor units (42, 43) to a pumping one of the units.

2. A connecting assembly as set forth in claim 1, in which the connecting plate includes fluid flow passages (89), and the hydraulic pump motor unit includes a fluid outlet (91) in fluid communication with one of the passages.

3. A connecting assembly as set forth in claim 1 or claim 2, which includes a mechanical drive opening (85) that extends longitudinally through the connecting plate from the sealed hydraulic chamber to the sealed gear set chamber, and a mechanical drive shaft extends longitudinally from end to end through the sealed hydraulic chamber and through the mechanical drive opening and into the sealed gear set chamber.

4. A connecting assembly as set forth in any one of claims 1 to 3, including a hydraulic drive opening (87) that extends longitudinally through the connecting plate from the sealed hydraulic chamber to the sealed gear set chamber, a hydraulic pump motor unit drive shaft (44) drivingly connected to the hydraulic pump motor unit, and the hydraulic pump motor unit drive shaft extends longitudinally through the hydraulic drive opening.

5. A connecting assembly as set forth in claim 4, in which the hydraulic drive openings are in laterally offset relation to the mechanical drive opening and are in circumferentially spaced relation to one another.

6. A connecting assembly as set forth in any one of claims 1 to 5, in which the gear set includes a plurality of gear components (72, 73, 74, 75), the mechanical drive shaft is connected to one of the gear components (74), and each hydraulic pump motor unit drive shaft is connected to another of the gear components (72).

## Patentansprüche

1. Eine Verbindungsanordnung (84) für ein hydromechanisches Getriebe (11), aufweisend:
eine Verbindungsplatte (25) mit einer Hydraulikeinheit-Wand (25a) und einer Getriebeeinheit-Wand (25b),
ein Hydraulikeinheit-Gehäuse (26), das mit der Hydraulikeinheit-Wand verbunden ist, um eine abgedichtete Hydraulikkammer (36) bereitzustellen, die eine Hydraulikflüssigkeit beinhaltet,
ein Getriebeeinheit-Gehäuse (29), das mit der Getriebeeinheit-Wand verbunden ist, um eine abgedichtete Getriebekammer (37) bereitzustellen,
erste und zweite Hydraulikpumpenmotoreinheiten (42,43), die in der abgedichteten Hydraulikkammer vorgesehen und so angeordnet sind, dass Hydraulikflüssigkeit zwischen jeder der Pumpenmotoreinheiten und der abgedichteten Hydraulikkammer strömen kann, um den Austausch von Flüssigkeit zwischen den Pumpenmotoreinheiten zu erlauben, und
ein Getriebe (71), das in der abgedichteten Getriebekammer vorgesehen ist,
**dadurch gekennzeichnet, dass** der Flüssigkeitsstand innerhalb des Hydraulikeinheit-Gehäuses (26) im Wesentlichen oben an der Hydraulikeinheitenkammer ist, um es der Hydraulikeinheitenkammer (36) zu erlauben, eine Hydraulikflüssigkeitsreservoir bereitzustellen und den Austausch und die Strömung von Hydraulikflüssigkeit von einer Antreibenden der Pumpmotoreinheiten (42, 43) zu einer Pumpenden der Einheiten zu erlauben.

2. Eine Verbindungsanordnung nach Anspruch 1, bei welcher die Verbindungsplatte Flüssigkeitsströmungskanäle (89) umfasst, und die Hydraulikpumpenmotoreinheit einen Flüssigkeitsauslass (91) in Verbindung mit einem der Kanäle beinhaltet.

3. Eine Verbindungsanordnung nach Anspruch 1 oder Anspruch 2, welche eine Mechanikantrieb-Öffnung (85) umfasst, die sich longitudinal durch die Verbindungsplatte von der abgedichteten Hydraulikkammer zu der abgedichteten Getriebekammer erstreckt und eine Mechanikantrieb-Welle umfasst, die sich longitudinal von einem zum anderen Ende durch die abgedichtete Hydraulikkammer, durch die Mechanikantrieb-Öffnung und in die abgedichtete Getriebekammer erstreckt.

4. Eine Verbindungsanordnung nach einem der Ansprüche 1 bis 3, die eine Hydraulikantrieb-Öffnung (87) umfasst, die sich longitudinal durch die Verbindungsplatte von der abgedichteten Hydraulikkammer zu der abgedichteten Getriebekammer erstreckt, die eine Hydraulikpumpenmotoreinheit -Antriebswelle (47) umfasst, die antriebsmäßig mit der Hydraulikpumpmotoreinheit verbunden ist, und wobei die Hydraulikpumpenmotoreinheit-Antriebswelle sich longitudinal durch die Hydraulikantrieb-Öffnung erstreckt.

5. Eine Verbindungsanordnung nach Anspruch 4, bei welcher die Hydraulikantrieb-Öffnungen in lateral verschobener Beziehung zu der Mechanikantrieb-Öffnung stehen und in umfangsmäßig beabstandeter Beziehung zueinander stehen.

6. Eine Verbindungsanordnung nach einem der Ansprüche 1 bis 5, bei welcher das Getriebe eine Mehrzahl von Getriebekomponenten (72, 73, 74, 75) umfasst, bei welcher die Mechanikantrieb-Welle mit einer der Getriebekomponenten (74) verbunden ist und bei welcher jede Hydraulikpumpenmotoreinheit-Antriebswelle mit einer anderen der Getriebekomponenten (72) verbunden ist.

## Revendications

1. Ensemble de raccordement (84) pour une transmission hydromécanique (11), comprenant,
une plaque de raccordement (25) ayant une paroi d'unité hydraulique (25a) et une paroi d'unité de train d'engrenages (25b),
un boîtier d'unité hydraulique (26) qui est raccordé à la paroi d'unité hydraulique pour fournir une chambre hydraulique étanche (36) qui contient un fluide hydraulique,
un boîtier d'unité de train d'engrenages (29) qui est raccordé à la paroi d'unité de train d'engrenages pour fournir une chambre de train d'engrenages étanche (37),
des première et deuxième unités hydrauliques pompe-moteur (42, 43) disposées dans la chambre hydraulique étanche et agencées de sorte que le fluide hydraulique puisse s'écouler entre chacune des unités pompe-moteur et la chambre hydraulique étanche de manière à permettre un échange de fluide entre les unités pompe-moteur, et
un train d'engrenages (71) disposé dans la chambre de train d'engrenages étanche,
**caractérisé en ce que** le niveau de fluide dans le boîtier d'unité hydraulique (26) étant essentiellement au sommet de la chambre d'unité hydraulique pour permettre à la chambre d'unité hydraulique (36) de fournir un réservoir de fluide hydraulique et pour permettre un échange et un écoulement de fluide hydraulique d'une unité d'entraînement d'unités pompe-moteur (42, 43) à une unité de pompage des unités.

2. Ensemble de raccordement selon la revendication 1, dans lequel la plaque de raccordement comporte des passages d'écoulement de fluide (89), et l'unité hydraulique pompe-moteur comporte une sortie de fluide (91) en communication fluidique avec l'un des passages.

3. Ensemble de raccordement selon la revendication 1 ou 2, qui comporte une ouverture d'entraînement mécanique (85) qui s'étend longitudinalement à travers la plaque de raccordement à partir de la chambre hydraulique étanche à la chambre de train d'engrenages étanche, et un arbre d'entraînement mécanique s'étend longitudinalement d'une extrémité à l'autre à travers la chambre hydraulique étanche et à travers l'ouverture d'entraînement mécanique et dans la chambre de train d'engrenages étanche.

4. Ensemble de raccordement selon l'une quelconque des revendications 1 à 3, comportant une ouverture d'entraînement hydraulique (87) qui s'étend longitudinalement à travers la plaque de raccordement à partir de la chambre hydraulique étanche à la chambre de train d'engrenages étanche, un arbre d'entraînement d'unité hydraulique pompe-moteur (44) raccordé par entraînement à l'unité hydraulique pompe-moteur, et l'arbre d'entraînement d'unité hydraulique pompe-moteur s'étend longitudinalement à travers l'ouverture d'entraînement hydraulique.

5. Ensemble de raccordement selon la revendication 4, dans lequel les ouvertures d'entraînement hydraulique sont en relation latéralement décalée par rapport à l'ouverture d'entraînement mécanique et sont en relation espacée de manière circonférentielle l'une par rapport à l'autre.

6. Ensemble de raccordement selon l'une quelconque des revendications 1 à 5, dans lequel le train d'engrenages comporte une pluralité de composants d'engrenage (72, 73, 74, 75), l'arbre d'entraînement mécanique est raccordé à l'un des composants d'engrenage (74), et chaque arbre d'entraînement d'unité hydraulique pompe-moteur est raccordé à l'autre des composants d'engrenage (72).
